(19) **Europäisches Patentamt European Patent Office Office européen des brevets**

(11) **EP 4 156 492 B1**

(12) **EUROPEAN PATENT SPECIFICATION**

(45) Date of publication and mention of the grant of the patent:
**27.08.2025 Bulletin 2025/35**

(21) Application number: **21828616.9**

(22) Date of filing: **27.03.2021**

(51) International Patent Classification (IPC):
*H02P 27/08* (2006.01)    *H02P 29/68* (2016.01)
*H02M 1/00* (2006.01)    *H02P 29/60* (2016.01)

(52) Cooperative Patent Classification (CPC):
**H02M 1/0048; H02P 27/085; H02P 29/60;**
**H02P 29/68;** H02M 1/327

(86) International application number:
**PCT/CN2021/083468**

(87) International publication number:
**WO 2021/258799 (30.12.2021 Gazette 2021/52)**

(54) **INVERTER SWITCHING FREQUENCY ADJUSTING METHOD, POWER ASSEMBLY SYSTEM**

VERFAHREN ZUR EINSTELLUNG DER SCHALTFREQUENZ EINES WECHSELRICHTERS, STROMVERSORGUNGSSYSTEM

PROCÉDÉ D'AJUSTEMENT DE FRÉQUENCE DE COMMUTATION D'UN ONDULEUR, SYSTÈME D'ENSEMBLE D'ALIMENTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2020  CN 202010596086**

(43) Date of publication of application:
**29.03.2023  Bulletin 2023/13**

(73) Proprietor: **Huawei Digital Power Technologies Co., Ltd.**
**Shenzhen, Guangdong 518043 (CN)**

(72) Inventors:
• **WANG, Jiangang**
  **Shenzhen, Guangdong 518129 (CN)**
• **TANG, Jie**
  **Shenzhen, Guangdong 518129 (CN)**
• **LAN, Hua**
  **Shenzhen, Guangdong 518129 (CN)**
• **CHEN, Jun**
  **Shenzhen, Guangdong 518129 (CN)**
• **LI, Quanming**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
CN-A- 109 756 170    CN-A- 109 823 193
CN-A- 110 138 284    CN-A- 111 884 531
JP-A- 2009 190 442    JP-B1- 6 080 996
US-B2- 7 084 600    US-B2- 9 007 013
US-B2- 9 318 991

• KARAMUK MUSTAFA: "Review of Electric Vehicle Powertrain Technologies with OEM Perspective", 2019 INTERNATIONAL AEGEAN CONFERENCE ON ELECTRICAL MACHINES AND POWER ELECTRONICS (ACEMP) & 2019 INTERNATIONAL CONFERENCE ON OPTIMIZATION OF ELECTRICAL AND ELECTRONIC EQUIPMENT (OPTIM), IEEE, 27 August 2019 (2019-08-27), pages 18 - 28, XP033721864, DOI: 10.1109/ACEMP-OPTIM44294.2019.9007175

EP 4 156 492 B1

## Description

## TECHNICAL FIELD

This application relates to the field of electric vehicles, and in particular, to a method for adjusting a switching frequency of an inverter, a power assembly system, and an electric vehicle.

## BACKGROUND

According to related data, air pollution is mainly caused by various exhaust gases, and more than 30% of the air pollution is from automobile exhaust gases. To better protect global environment and provide a better living environment for human beings, there are a large quantity of electric vehicles. Generally, an electric vehicle (EV) is a vehicle that is driven by a vehicle-mounted power supply, drives wheels by an inverter, and meets requirements of road traffic and safety regulations. Due to smaller impact on the environment than a conventional automobile, prospects of the electric vehicle are widely appreciated.

Currently, when the electric vehicle is in a running state, an inverter and a motor are very likely to be in an over-temperature (over-temperature) state, and this directly affects energy consumption of an entire system of the electric vehicle, and even in a severe state, may further affect normal operation and safe driving of the electric vehicle. Therefore, how to avoid an over-temperature state of the inverter and the motor while ensuring performance and efficiency of the motor is a technical problem that needs to be urgently resolved.

JP 6080996 B1 discloses that for each sample switching frequency fc_1~fc_n, to determine n pieces of the correction torque command Trq_adj * _1, ···, Trq_adj * _n, and generates associated parameters (fc_1, Trq_adj * _1, Ploss_1) ~(fc_n, Trq_adj * _n, Ploss_n), and discloses changing the output torque of the motor according to a switching frequency.

JP 2009 190442 A discloses that when the driving current of the motor (a second motor generator MG 2) cannot be reduced during gear change (when a possibility of battery restriction or excess rotation of engine exists), the torque down is carried out by reducing driving efficiency of the second motor generator MG 2.

US 9318991 B2 discloses that a switching frequency meeting a desired operating condition is identified from information relating to operation of the electric motor. A switching of a current supplied to the electric motor with the switching frequency identified is controlled.

## SUMMARY

The present invention is set out in the appended set of claims. This application provides a method for adjusting a switching frequency of an inverter, a power assembly system, and an electric vehicle, to avoid an over-temperature state of a motor and the inverter, and ensure normal running of the electric vehicle.

According to a first aspect, a method for adjusting a switching frequency of an inverter is provided. A current output by the inverter is used to drive rotation of a motor, and the method includes: obtaining a first operating point of the motor in operation, where the first operating point includes torque and a rotation speed; determining, based on a determined correspondence between an operating point and a switching frequency, a first switching frequency corresponding to the first operating point; and adjusting a current switching frequency of the inverter to the first switching frequency.

In this embodiment of this application, after obtaining a specific operating point, a controller may determine, based on the correspondence between an operating point and a switching frequency, a switching frequency corresponding to the operating point, and then set the switching frequency of the inverter to the determined switching frequency, so that an over-temperature state of the motor and the inverter can be avoided, to ensure normal running of the electric vehicle.

In a possible implementation, the correspondence between an operating point and a switching frequency is a correspondence between an operating type and a switching frequency, and a plurality of operating points that belong to a same operating type correspond to a same switching frequency; and the determining, based on a determined correspondence between an operating point and a switching frequency, a first switching frequency corresponding to the first operating point includes: if it is determined that the first operating point belongs to a first operating type, determining a first switching frequency of the first operating type based on the determined correspondence between an operating type and a switching frequency, where the first operating type is one of a plurality of operating types determined based on the torque or the rotation speed of the motor. In this embodiment of this application, when the correspondence between an operating point and a switching frequency is the correspondence between an operating type and a switching frequency, after obtaining a specific operating point, the controller may first determine an operating type of the operating point, and then determine, based on the determined correspondence between an operating type and a switching frequency, a switching frequency corresponding to the operating type, and then set the switching frequency of the inverter to the determined switching frequency, so that an over-temperature state of the motor and the inverter can be avoided, to ensure normal running of the electric vehicle.

According to the invention, when the rotation speed of the motor is greater than a first rotation speed value, the first switching frequency is greater than the current switching frequency, and when the torque of the motor is greater than a first torque value, the first switching frequency is less than the current switching frequency.

In a possible implementation, the method further includes: obtaining temperature of the motor and temperature of the inverter; and when the temperature of the motor is less than a specified first threshold and the temperature of the inverter is greater than a specified second threshold, decreasing the first switching frequency; or when the temperature of the motor is greater than the specified first threshold and the temperature of the inverter is less than the specified second threshold, increasing the first switching frequency. In this embodiment of this application, the controller may fine-tune the first switching frequency based on the temperature of the motor and/or the temperature of the inverter, so that the switching frequency of the inverter is precisely controlled, to avoid an over-temperature state of the motor and the inverter, and ensure normal running of the electric vehicle.

In a possible implementation, the method further includes: obtaining a first efficiency value corresponding to the first operating point, where the first efficiency value is an efficiency value that is of efficiency of the motor, efficiency of the inverter, and efficiency of a speed reducer and that meets a preset condition; determining a second switching frequency when the inverter meets the first efficiency value; and adjusting the switching frequency of the inverter based on the first switching frequency and the second switching frequency. In this embodiment of this application, the controller may fine-tune the first switching frequency based on the efficiency of the motor, the efficiency of the inverter, and the efficiency of the speed reducer, so that the switching frequency of the inverter is precisely controlled, to avoid an over-temperature state of the motor and the inverter, and ensure normal running of the electric vehicle.

In a possible implementation, the obtaining a first efficiency value corresponding to the first operating point includes: determining, based on a predetermined efficiency map of the motor, a predetermined efficiency map of the inverter, and a predetermined efficiency map of the speed reducer, the first efficiency value corresponding to the first operating point, where the efficiency map of the motor is used to represent efficiency values of the motor at different switching frequencies of the inverter, the efficiency map of the inverter is used to represent efficiency values of the inverter at different switching frequencies of the inverter, and the efficiency map of the speed reducer is used to represent efficiency values of the speed reducer at different switching frequencies of the inverter.

In a possible implementation, the adjusting the switching frequency of the inverter based on the first switching frequency and the second switching frequency includes: when it is determined that a difference between the first switching frequency and the second switching frequency is greater than a third threshold, adjusting the first switching frequency of the inverter to the second switching frequency; or when it is determined that the difference between the first switching frequency and the second switching frequency is less than or equal to the third threshold, keeping the switching frequency of the inverter as the first switching frequency. In this embodiment of this application, the first switching frequency is determined based on the correspondence between an operating point and a switching frequency (which may alternatively be a correspondence between a region and a switching frequency), and the second switching frequency is determined based on the efficiency of the motor, the efficiency of the inverter, and the efficiency of the speed reducer. Therefore, it may be learned that, compared with setting the switching frequency of the inverter to the first switching frequency, if the switching frequency of the inverter is set to the second switching frequency, the temperature of the motor and the temperature of the inverter can be better adjusted, to avoid an over-temperature state of the motor and the inverter. Based on this, when it is determined that the difference between the first switching frequency and the second switching frequency is greater than the third threshold, the first switching frequency of the inverter is adjusted to the second switching frequency. When it is determined that the difference between the first switching frequency and the second switching frequency is less than or equal to the third threshold, the switching frequency of the inverter is kept as the first switching frequency, or the first switching frequency of the inverter is adjusted to the second switching frequency. In this way, an over-temperature state of the temperature of the motor and the temperature of the inverter can be avoided, and normal running of the electric vehicle is ensured.

According to a second aspect, an embodiment of this application not forming part of the invention but representing background art that is useful for understanding the invention provides another method for adjusting a switching frequency of an inverter. A current output by the inverter is used to drive rotation of a motor, and the method includes: obtaining temperature of the motor and temperature of the inverter; and when the temperature of the motor is less than a specified first threshold and the temperature of the inverter is greater than a specified second threshold, decreasing a switching frequency of the inverter; or when the temperature of the motor is greater than the specified first threshold and the temperature of the inverter is less than the specified second threshold, increasing the switching frequency of the inverter.

In this embodiment of this application, the method may be used when the inverter is at an initial switching frequency (for example, the initial switching frequency is 8 kHz). A controller may adjust the initial switching frequency of the inverter based on the temperature of the motor and/or the temperature of the inverter while the initial switching frequency of the inverter is considered, or the controller may directly adjust the switching frequency of the inverter based on the temperature of the motor and/or the temperature of the inverter without considering the initial switching frequency of the inverter. In this implementation, an over-temperature state of the motor and the inverter can be avoided, and normal running of the electric vehicle is ensured.

According to a third aspect, an embodiment of this application not forming part of the invention but representing background art that is useful for understanding the invention provides another method for adjusting a switching frequency of an inverter. A current output by the inverter is used to drive rotation of a motor, and the method includes: obtaining a first operating point of the motor in operation, and determining a first efficiency value corresponding to the first operating point, where the first efficiency value is an efficiency value that is of efficiency of the motor, efficiency of the inverter, and efficiency of a speed reducer and that meets a preset condition; determining a second switching frequency when the inverter meets the first efficiency value; and adjusting a current switching frequency of the inverter to the second switching frequency.

In this embodiment of this application, after obtaining a specific operating point, a controller may obtain, based on the efficiency of the motor, the efficiency of the inverter, and the efficiency of the speed reducer, an efficiency value that is corresponding to the operating point and that meets the preset condition, and then determine a switching frequency at which the inverter meets the efficiency value, and then set the current switching frequency of the inverter to the determined switching frequency, so that an over-temperature state of the motor and the inverter can be avoided, to ensure normal running of an electric vehicle.

In a possible implementation, the method further includes: obtaining temperature of the motor and temperature of the inverter; and when the temperature of the motor is less than a specified first threshold and the temperature of the inverter is greater than a specified second threshold, decreasing the second switching frequency; or when the temperature of the motor is greater than the specified first threshold and the temperature of the inverter is less than the specified second threshold, increasing the second switching frequency. In this embodiment of this application, the controller may fine-tune the second switching frequency based on the temperature of the motor and/or the temperature of the inverter, so that the switching frequency of the inverter is precisely controlled, to avoid an over-temperature state of the motor and the inverter, and ensure normal running of the electric vehicle.

According to a fourth aspect, this application not forming part of the invention but representing background art that is useful for understanding the invention provides an apparatus for adjusting a switching frequency. A current output by an inverter is used to drive rotation of a motor, and the apparatus may include: a first obtaining unit, configured to obtain a first operating point of the motor in operation, where the first operating point includes torque and a rotation speed; a first determining unit, configured to determine, based on a determined correspondence between an operating point and a switching frequency, a first switching frequency corresponding to the first operating point; and a first adjustment unit, configured to adjust a current switching frequency of the inverter to the first switching frequency.

In a possible implementation, the correspondence between an operating point and a switching frequency is a correspondence between an operating type and a switching frequency, and a plurality of operating points that belong to a same operating type correspond to a same switching frequency; and the determining, based on a determined correspondence between an operating point and a switching frequency, a first switching frequency corresponding to the first operating point includes: if it is determined that the first operating point belongs to a first operating type, determining a first switching frequency of the first operating type based on the determined correspondence between an operating type and a switching frequency, where the first operating type is one of a plurality of operating types determined based on the torque or the rotation speed of the motor.

In a possible implementation, when the rotation speed of the motor is greater than a first rotation speed value, the first switching frequency is greater than the current switching frequency, and when the torque of the motor is greater than a first torque value, the first switching frequency is less than the current switching frequency.

In a possible implementation, the apparatus further includes: a second obtaining unit, configured to obtain temperature of the motor and temperature of the inverter; and a second adjustment unit, configured to: when the temperature of the motor is less than a specified first threshold and the temperature of the inverter is greater than a specified second threshold, decrease the first switching frequency; or when the temperature of the motor is greater than the specified first threshold and the temperature of the inverter is less than the specified second threshold, increase the first switching frequency.

In a possible implementation, the apparatus further includes: a third obtaining unit, configured to obtain a first efficiency value corresponding to the first operating point, where the first efficiency value is an efficiency value that is of efficiency of the motor, efficiency of the inverter, and efficiency of a speed reducer and that meets a preset condition; a second determining unit, configured to determine a second switching frequency when the inverter meets the first efficiency value; and a third adjustment unit, configured to adjust the switching frequency of the inverter based on the first switching frequency and the second switching frequency.

In a possible implementation, the third obtaining unit is specifically configured to: determine, based on a predetermined efficiency map of the motor, a predetermined efficiency map of the inverter, and a predetermined efficiency map of the speed reducer, the first efficiency value corresponding to the first operating point, where the efficiency map of the motor is used to represent efficiency values of the motor at different switching frequencies of the inverter, the efficiency map of the inverter is used to represent efficiency values of the inverter at different switching frequencies of the inverter, and the efficiency map of the speed reducer is used to represent efficiency values of the speed reducer at different switching frequencies of the inverter.

In a possible implementation, the third adjustment unit is specifically configured to: when it is determined that a difference between the first switching frequency and the second switching frequency is greater than a third threshold, adjust the first switching frequency of the inverter to the second switching frequency; or when it is determined that the difference between the first switching frequency and the second switching frequency is less than or equal to the third threshold, keep the switching frequency of the inverter as the first switching frequency.

According to a fifth aspect, an embodiment of this application not forming part of the invention but representing background art that is useful for understanding the invention provides another apparatus for adjusting a switching frequency. A current output by the inverter is used to drive rotation of a motor, and the apparatus may include: an obtaining unit, configured to obtain temperature of the motor and temperature of the inverter; and an adjustment unit, configured to: when the temperature of the motor is less than a specified first threshold and the temperature of the inverter is greater than a specified second threshold, decrease a switching frequency of the inverter; or when the temperature of the motor is greater than the specified first threshold and the temperature of the inverter is less than the specified second threshold, increase the switching frequency of the inverter.

According to a sixth aspect, an embodiment of this application not forming part of the invention but representing background art that is useful for understanding the invention provides another apparatus for adjusting a switching frequency. A current output by the inverter is used to drive rotation of a motor, and the apparatus includes: a first obtaining unit, configured to: obtain a first operating point of the motor in operation, and determine a first efficiency value corresponding to the first operating point, where the first efficiency value is an efficiency value that is of efficiency of the motor, efficiency of the inverter, and efficiency of a speed reducer and that meets a preset condition; a determining unit, configured to determine a second switching frequency when the inverter meets the first efficiency value; and a first adjustment unit, configured to adjust a current switching frequency of the inverter to the second switching frequency.

In a possible implementation, the apparatus further includes: a second obtaining unit, configured to obtain temperature of the motor and temperature of the inverter; and a second adjustment unit, configured to: when the temperature of the motor is less than a specified first threshold and the temperature of the inverter is greater than a specified second threshold, decrease the second switching frequency; or when the temperature of the motor is greater than the specified first threshold and the temperature of the inverter is less than the specified second threshold, increase the second switching frequency.

According to a seventh aspect, an embodiment of this application provides a power assembly system, and the power assembly system includes a motor, an inverter, and a controller. A current output by the inverter is used to drive rotation of the motor, and the controller is configured to perform the method according to any one of the first aspect.

According to an eighth aspect, an embodiment of this application provides an electric vehicle, including a plurality of wheels and a power assembly system that provides power for the plurality of wheels. The power assembly system includes a controller, a motor, an inverter, and a speed reducer, to perform the method according to any one of the first aspect by using the controller

According to a ninth aspect, an embodiment of this application further provides a computer-readable storage medium, and the computer-readable storage medium stores a computer program. The computer program includes program instructions, and when the program instructions are executed by a controller, the controller is enabled to perform the method according to any one of the aspect

According to a tenth aspect, an embodiment of this application further provides a computer program, the computer program includes computer software instructions, and when the computer software instructions are executed by a computer, the controller is enabled to perform the method according to any one of the first aspect.

**BRIEF DESCRIPTION OF DRAWINGS**

FIG. 1a is a diagram of experimental data of a power assembly system according to an embodiment of this application;
FIG. 1b is a schematic diagram of a structure of an electric vehicle 10 according to an embodiment of this application;
FIG. 2 is a schematic diagram of a structure of a power assembly system according to an embodiment of this application;
FIG. 3a is a schematic flowchart of a method for adjusting a switching frequency of an inverter according to an embodiment of this application;
FIG. 3b is a schematic diagram of a spatial coordinate system according to an embodiment of this application;

FIG. 3c is a schematic diagram of region division according to an embodiment of this application;

FIG. 3d is a schematic diagram of other region division according to an embodiment of this application;

FIG. 4 is a schematic flowchart of another method for adjusting a switching frequency of an inverter according to an embodiment of this application;

FIG. 5 is a schematic flowchart of another method for adjusting a switching frequency of an inverter according to an embodiment of this application;

FIG. 6 is a schematic flowchart of another method for adjusting a switching frequency of an inverter according to an embodiment of this application;

FIG. 7 is a schematic flowchart of another method for adjusting a switching frequency of an inverter according to an embodiment of this application;

FIG. 8a is a schematic flowchart of another method for adjusting a switching frequency of an inverter according to an embodiment of this application;

FIG. 8b is a schematic diagram of another spatial coordinate system according to an embodiment of this application;

FIG. 9 shows an apparatus for adjusting a switching frequency according to an embodiment of this application;

FIG. 10 shows another apparatus for adjusting a switching frequency according to an embodiment of this application;

FIG. 11 shows another apparatus for adjusting a switching frequency according to an embodiment of this application; and

FIG. 12 is a schematic diagram of a structure of a power assembly system according to an embodiment of this application.

## DESCRIPTION OF EMBODIMENTS

The following clearly and completely describes technical solutions in embodiments of this application with reference to the accompanying drawings. It is clear that the described embodiments are merely some rather than all of the embodiments of this application.

In the specification and accompanying drawings of this application, the terms "first", "second", and the like are intended to distinguish between different objects or distinguish between different processing of a same object, but do not indicate a particular order of the objects. In addition, the terms "including", "having" and any other variant thereof mentioned in descriptions of this application are intended to cover non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner. In embodiments of this application, "A and/or B" represents two meanings: A and B, and A or B. "A, B, and/or C" represents any one of A, B, and C, or represents any two of A, B, and C, or represents A, B, and C.

In embodiments of this application, an inverter is an apparatus for converting a direct current (DC) into an alternating current (AC). The inverter includes an inverter bridge, control logic, and a filtering circuit. Generally, conversion efficiency of the inverter can reach 80% to 90%.

In embodiments of this application, heat generated by a power assembly system mainly includes the following parts:

(1) In a process in which the inverter converts a direct current (DC) into an alternating current (AC), there may be specific energy loss due to conversion efficiency, and the energy loss may be converted into heat.

(2) At the same time, the alternating current (AC) generated by the inverter enters a motor, and is converted, through electromagnetic induction, into mechanical energy that can enable the motor to rotate. In a process of converting electric energy into the mechanical energy, heat is also generated due to conversion efficiency.

(3) When the motor rotates at a high speed, a rotation speed of the motor may be reduced by using a speed reducer. In a process in which the speed reducer controls the rotation speed of the motor, heat is generated.

In actual application, generation of the heat easily causes an over-temperature state of temperature of the motor and temperature of the inverter, and consequently, energy consumption of an entire system of an electric vehicle is directly affected, and even in a severe state, normal operation and safe driving of the electric vehicle may be further affected. To resolve this problem, this application proposes a solution for adjusting a switching frequency of an inverter.

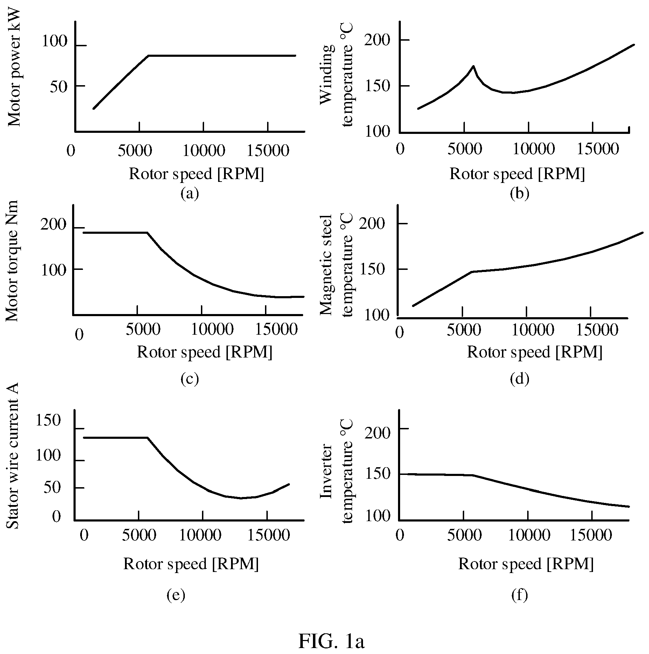

In embodiments of this application, a core principle of adjusting the switching frequency of the inverter is as follows: When the switching frequency of the inverter increases, harmonic loss of an output current of the inverter decreases, and in this case, harmonic loss of a motor rotor decreases, so that temperature of the motor rotor decreases. Because the switching frequency of the inverter increases, loss of the inverter increases, and consequently, temperature of the inverter increases. For example, when the motor is at a highest rotation speed, it may be learned with reference to (a) to (d) in FIG. 1a that the motor (such as a coil and rotor magnet steel in the motor) is prone to an over-temperature state. In this case, a ripple of an alternating current (AC) can be effectively suppressed by increasing the switching frequency of the inverter, to reduce harmonic loss of the motor rotor and the coil, and in this way, temperature of the motor can be reduced. For another example, when the motor is at maximum torque (in other words, a current generated by the inverter is maximum), it may be learned with reference to (e) and (f) in FIG. 1a that a core of the inverter is prone to an over-temperature state. In this case, the switching frequency of the inverter may be reduced to reduce loss of the inverter, so that temperature of the core of the inverter can be reduced. According to the technical solution described in this application, a proper switching frequency of the inverter is determined, so that an over-temperature state of the temperature of the motor and the temperature of the inverter can be avoided.

The following describes the technical solutions of this application in detail with reference to the accompanying drawings.

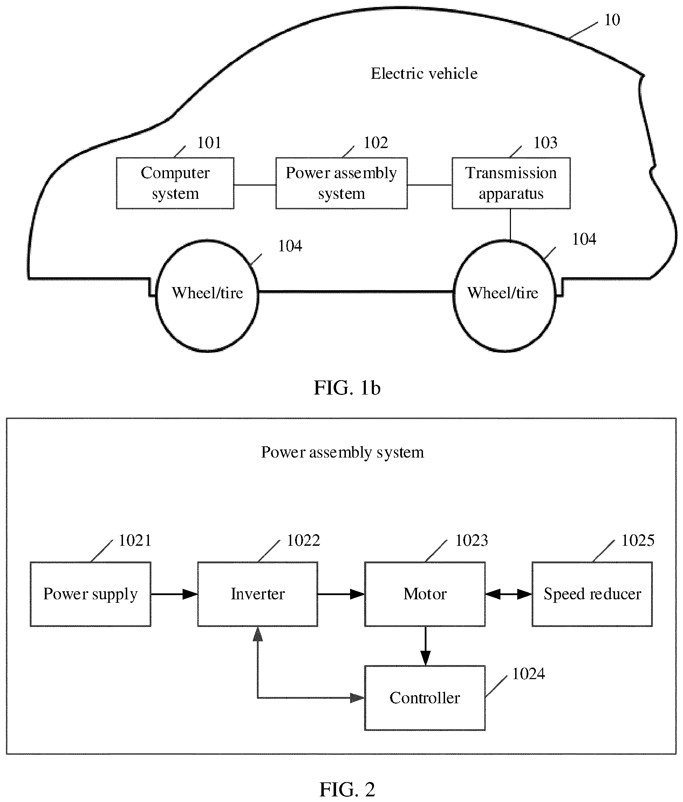

FIG. 1b is a schematic diagram of a structure of an electric vehicle 10 according to an embodiment of this application. The electric vehicle 10 may include various sub-systems, such as a computer system 101, a power assembly system 102, a transmission apparatus 103, and a wheel/tire 104. In actual application, the electric vehicle 10 may include more or fewer sub-systems, and each sub-system may include a plurality of elements. In some implementations, each sub-system and each element of the electric vehicle 10 may be connected in a wired or wireless manner.

In this embodiment of this application, some or all functions of the electric vehicle 10 are controlled by the computer system 101. Generally, the computer system 101 may include at least one processor, and the processor executes an instruction stored in a non-transient computer-readable medium such as a data storage apparatus. The computer system 101 may alternatively be a plurality of computing devices that control an individual component or a subsystem of the electric vehicle 10 in a distributed manner.

The at least one processor is a module for performing an arithmetic operation and a logical operation, and may be one of or a combination of a plurality of processing modules such as a central processing unit (CPU), a graphics processing unit (GPU), a microprocessor unit (MPU), a field-programmable gate array (FPGA), and an application-specific integrated circuit (ASIC).

A person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer. Thus, it is understood that a reference to the processor or the computer includes a reference to a set of processors or computers or memories that may or may not operate in parallel. Different from using a single processor to perform the steps described herein, some components such as a steering component and a deceleration component each may include a respective processor (which is also referred to as a controller). The processor performs only computation related to a component-specific function.

For example, the processor may be located far away from the electric vehicle and communicate wirelessly with the electric vehicle. For example, some of the processes described herein are performed on the processor disposed inside the vehicle, while others are performed by a remote processor. The processes include necessary steps for performing a single operation.

In some embodiments, the data storage apparatus may include the instruction (for example, program logic), and the instruction may be executed by the processor to perform various functions of the electric vehicle 10, including functions described above. The data storage apparatus may also include additional instructions, including instructions for sending data to, receiving data from, interacting with, and/or controlling one or more of the computer system 101, the power assembly system 102, and the transmission apparatus 103.

In addition to the instructions, the data storage apparatus may further store data, such as a road map, route information, a location, a direction, a speed, and other vehicle data of the vehicle, and other information. Such information may be used by the electric vehicle 10 and the computer system 101 during operation of the electric vehicle 10 in an autonomous, semi-autonomous, and/or manual mode.

In this embodiment of this application, the power assembly system 102 may include a component that provides power motion for the electric vehicle. As shown in FIG. 2, the power assembly system 102 may include a power supply 1021, an inverter 1022, a motor 1023, a controller 1024, and a speed reducer 1025.

The power supply 1021 is configured to provide electric power for all components of the electric vehicle 10. For example, the power supply 1021 may include a plurality of batteries. For example, the battery may be a rechargeable lithium-ion or lead-acid battery. One or more battery packs of such a battery may be configured as a power supply to supply power to the components of the electric vehicle 10. For example, the power supply 1021 and an energy source may jointly perform action to provide electric power for the electric vehicle. The energy source may include, for example, gasoline, diesel, other oil-based fuel, dimethylmethane or other compressed-gas-based fuel, ethyl alcohol, a solar panel, a battery, and another power source.

The inverter 1022 is configured to convert a direct current DC provided by the power supply 1021 into an alternating current AC, to supply power to the motor 1023.

The motor 1023 is configured to convert the alternating current AC output by the inverter 1022 into mechanical energy. In other words, the alternating current AC output by the inverter 1022 may be used to drive rotation of the motor 1023, and when the motor 1023 rotates, the alternating current AC may be converted into mechanical energy.

The controller 1024 is configured to control the motor 1023. For example, the controller 1024 may be configured to detect temperature of the motor 1023 and temperature of the inverter 1022, and perform corresponding control on the motor 1023 based on the detected temperature. In this embodiment of this application, the controller 1024 may be equivalent to a processor. In a subsequent embodiment, details are not described.

The speed reducer 1025 is configured to adjust a rotation speed of the motor 1023.

In this embodiment of this application, the transmission apparatus 103 is configured to transmit mechanical power from the power assembly system 102 to the wheel/tire 104, to drive the wheel to move forward or backward.

For example, the transmission apparatus 103 may include a gearbox, a differential, and a drive shaft. The transmission apparatus 103 may further include another component, such as a clutch. The drive shaft may include one or more shafts that may be coupled to one or more wheels.

In this embodiment of this application, the electric vehicle 10 is a vehicle that is driven by a vehicle-mounted power supply, drives wheels by using an inverter, and meets requirements of road traffic and safety regulations. For example, the electric vehicle 10 may be specifically a battery electric vehicle (BEV), a hybrid electric vehicle (HEV), a fuel cell electric vehicle (FCEV), or the like. This is not specifically limited in this embodiment of this application.

In some implementations, the electric vehicle 10 may further include a hardware structure and/or a software module, to implement the foregoing functions in a form of the hardware structure, the software module, or the hardware structure and the software module. Whether a function in the foregoing functions is performed by the hardware structure, the software module, or the combination of the hardware structure and the software module depends on particular applications and design constraints of the technical solutions.

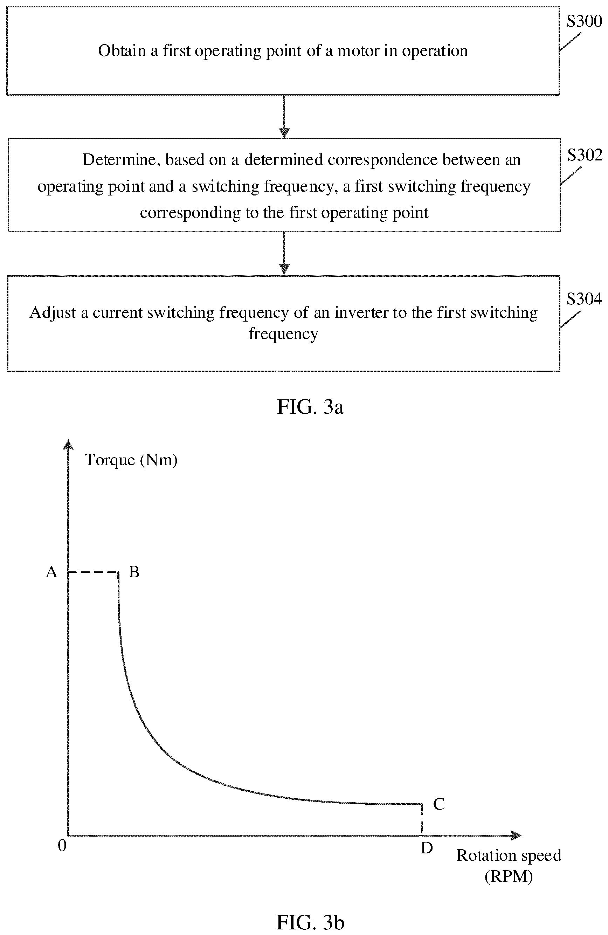

A power assembly system shown in FIG. 2 is used as an example. A method involved in this application is described in detail below. FIG. 3a shows a method for adjusting a switching frequency of an inverter according to an embodiment of this application. The method may include some or all of the following steps.

Step S300: Obtain a first operating point of a motor in operation, where the first operating point includes torque and a rotation speed.

In this embodiment of this application, a controller may obtain an electrical parameter of the motor in operation. For example, the electrical parameter may include a current, a voltage, power, and the like of the motor. Then, the controller obtains the first operating point of the motor based on the electrical parameter of the motor. For example, the rotation speed of the motor may be determined based on a power supply frequency input to the motor and a pole-pair number of a rotating magnetic field of the motor. For example, the rotation speed of the motor may be determined based on formula (1). The formula (1) may be represented as follows:

$$n = 60f / p \quad (1),$$

where
n represents the rotation speed of the motor, f represents the power supply frequency input to the motor, and p represents the pole-pair number of the rotating magnetic field of the motor.

For another example, the torque of the motor may be determined based on output power of the motor and the rotation speed of the motor. For example, the torque of the motor may be determined based on formula (2). The formula (2) may be represented as follows:

$$T = 9550 * P / n \quad (2),$$

where
T represents the torque of the motor, P represents the output power of the motor, and n represents the rotation speed of the motor.

Step S302: Determine, based on a determined correspondence between an operating point and a switching frequency, a first switching frequency corresponding to the first operating point.

In this embodiment of this application, the correspondence between an operating point and a switching frequency may be determined by using experimental data of a power assembly system (for example, the experimental data may include the torque and the rotation speed of the motor, and the switching frequency of the inverter), or the correspondence between an operating point and a switching frequency may be obtained in real time by using a data model constructed based on the experimental data of the power assembly system.

In this embodiment of this application, the determined correspondence between an operating point and a switching frequency may include but is not limited to that shown in Table 1.

**Table 1**

| Operating point | Switching frequency |
|---|---|
| Operating point 1 | Switching frequency 1 |

(continued)

| Operating point | Switching frequency |
|---|---|
| Operating point 2 | Switching frequency 1 |
| Operating point 3 | Switching frequency 2 |
| Operating point 4 | Switching frequency 3 |
| ... | ... |
| Operating point n | Switching frequency n |

As shown in Table 1, in the correspondence between an operating point and a switching frequency, the controller sets a switching frequency corresponding to the operating point 1 to the switching frequency 1, sets a switching frequency corresponding to the operating point 2 to the switching frequency 1, sets a switching frequency corresponding to the operating point 3 to the switching frequency 2, and sets a switching frequency of the operating point 4 to the switching frequency 3. For example, when the rotation speed of the motor is 17300 RPM and the torque of the motor is 50 Nm (the operating point 1), a specified switching frequency is 10 kHz, when the rotation speed of the motor is 5115 RPM and the torque of the motor is 380 Nm (the operating point 2), a specified switching frequency is 8 kHz; and when the rotation speed of the motor is 5115 RPM and the torque of the motor is 140 Nm (the operating point 3), a specified switching frequency is 9 kHz. Therefore, after obtaining the operating point of the motor in operation, the controller may determine, based on the correspondence between an operating point and a switching frequency shown in Table 1, the switching frequency corresponding to the operating point, so that the switching frequency of the inverter may be adjusted based on the determined switching frequency. It should be noted that an example herein is merely an example, and should not constitute a limitation.

For example, the correspondence between an operating point and a switching frequency may be a correspondence between an operating type and a switching frequency. Herein, a plurality of operating points that belong to a same operating type correspond to a same switching frequency. Specifically, an operating type may be defined by using a factor such as torque and a rotation speed.

In this embodiment of this application, after obtaining the experimental data of the power assembly system, the controller sorts and analyzes the experimental data. It is found by sorting and analyzing the experimental data that a plurality of different operating points correspond to a same switching frequency. For example, a switching frequency of the inverter corresponding to the operating point 1 is the switching frequency 1, a switching frequency of the inverter corresponding to the operating point 2 is the switching frequency 1, a switching frequency of the inverter corresponding to the operating point 3 is the switching frequency 1, a switching frequency of the inverter corresponding to the operating point 4 is the switching frequency 2, and a switching frequency of the inverter corresponding to an operating point 5 is the switching frequency 2. In this case, the foregoing correspondence is further analyzed with reference to the torque or the rotation speed of the motor, to obtain an analysis result. For example, the analysis result may be as follows: A switching frequency corresponding to an operating type 1 is set to the switching frequency 1, and the operating point 1, the operating point 2, and the operating point 3 belong to the operating type 1; and a switching frequency corresponding to the operating type 2 is set to the switching frequency 2, and the operating point 4 and the operating point 5 belong to the operating type 2. In this case, after determining the correspondence between an operating type and a switching frequency, the controller adjusts a current switching frequency of the inverter based on the determined correspondence between an operating type and a switching frequency.

In this embodiment of this application, the "operating type" may be represented by using a "region" in a spatial coordinate system (for example, FIG. 3b to FIG. 3d) constructed based on an operating point of the motor. For example, a region 1 represents the operating type 1, and a region 2 represents the operating type 2.

In this embodiment of this application, when sorting and analyzing the experimental data of the power assembly system, the spatial coordinate system may be constructed based on the operating point of the motor. In this case, the region is a region in the spatial coordinate system constructed based on the operating point of the motor. For example, the spatial coordinate system may be a two-dimensional coordinate system. FIG. 3b is a schematic diagram of a structure of a spatial coordinate system according to an embodiment of this application. As shown in FIG. 3b, in the spatial coordinate system, the rotation speed of the motor is used as a horizontal direction, and the torque of the motor is used as a vertical direction. Specifically, the spatial coordinate system covers a region in which the motor can run. For example, the region is a region (that is, a region ABCDO) formed by a line segment AB, a curve BC, a line segment CD, a line segment OD, and a line segment OA. A point A is maximum torque that can be generated by the motor during running, a point D is a maximum rotation speed that can be borne by the motor during running, and the curve BC is a mechanical characteristic curve of the motor.

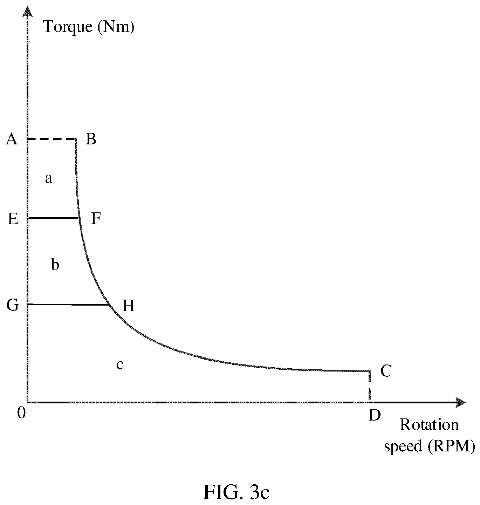

For example, the region ABCDO may be divided based on the torque of the motor, to obtain a plurality of regions. For example, as shown in FIG. 3c, the region ABCDO may be divided by using a straight line EF and a straight line GH, to obtain a region a, a region b, and a region c. Herein, the straight line EF and the straight line GH are straight lines parallel to the horizontal direction of the spatial coordinate system. For example, the straight line EF=140 Nm, and the straight line GH=70 Nm.

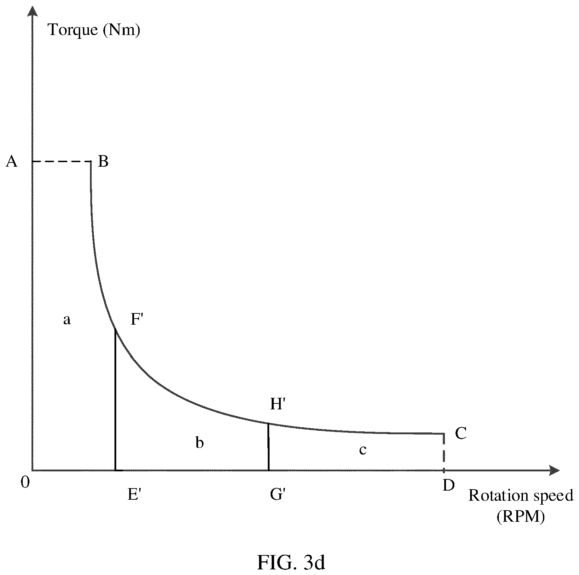

For example, the region ABCDO may be divided based on the rotation speed of the motor, to obtain a plurality of regions. For example, as shown in FIG. 3d, the region ABCDO may be divided by using a straight line E'F' and a straight line G'H', to obtain a region a, a region b, and a region c. Herein, the straight line E'F' and the straight line G'H' are straight lines parallel to the vertical direction of the spatial coordinate system. For example, the straight line G'H'=3500 RPM, and the straight line GH'=5115 RPM.

In this embodiment of this application, a correspondence between a region and a switching frequency may include but is not limited to that shown in Table 2.

**Table 2**

| Region | Switching frequency |
|---|---|
| Region 1 | Switching frequency 1 |
| Region 2 | Switching frequency 2 |
| Region 3 | Switching frequency 3 |
| Region 4 | Switching frequency 4 |
| ... | ... |
| Region n | Switching frequency n |

As shown in Table 2, in the correspondence between a region and a switching frequency, the controller sets a switching frequency corresponding to the region 1 to the switching frequency 1, sets a switching frequency corresponding to the region 2 to the switching frequency 2, sets a switching frequency corresponding to the region 3 to the switching frequency 3, and sets a switching frequency of the region 4 to the switching frequency 4. For example, the spatial coordinate system shown in FIG. 3b is divided based on the rotation speed of the motor, to obtain the region 1, the region 2, the region 3, and the region 4. The switching frequency corresponding to the region 1 is set to a switching frequency 8 kHz, a switching frequency corresponding to the region 2 is set to a switching frequency 8.5 kHz, a switching frequency corresponding to the region 3 is set to a switching frequency 9 kHz, and a switching frequency corresponding to the region 4 is set to a switching frequency 10 kHz. As described above, the operating type may be represented by using a "region" in the figure. To be specific, an operating point included in the region 1 belongs to an operating type 1, and a switching frequency corresponding to the operating type 1 is set to a switching frequency 8 kHz; an operating point included in the region 2 belongs to an operating type 2, and a switching frequency corresponding to the operating type 2 is set to a switching frequency 8.5 kHz; an operating point included in the region 3 belongs to an operating type 3, and a switching frequency corresponding to the operating type 3 is set to a switching frequency 9 kHz; and an operating point included in the region 4 belongs to an operating type 4, and a switching frequency corresponding to the operating type 4 is set to a switching frequency 10 kHz. In this case, after obtaining the operating point of the motor in operation, the controller first determines a region in which the operating point is located (that is, determines an operating type of the operating point), and then determines, based on the correspondence between operating type and a switching frequency shown in Table 2, a switching frequency corresponding to a specific operating point type. For example, a region to which the first operating point belongs may be determined in the figure (in other words, an operating type corresponding to the first operating point is determined), and a first switching frequency corresponding to the first operating type is determined based on the determined correspondence between an operating type and a switching frequency, so that the switching frequency of the inverter may be adjusted based on the determined first switching frequency. It should be noted that an example herein is merely an example, and should not constitute a limitation.

Step S304: Adjust a current switching frequency of the inverter to the first switching frequency.

After the first switching frequency corresponding to the first operating point is determined, the current switching frequency of the inverter is adjusted to the first switching frequency. Specifically, the current switching frequency may be a switching frequency at which the inverter works before adjustment.

According to the invention, when the rotation speed of the motor is greater than a first rotation speed value, the first switching frequency is greater than the current switching frequency, and when the torque of the motor is greater than a first torque value, the first switching frequency is less than the current switching frequency. According to the invention, the first rotation speed value is a maximum rotation speed at which the motor is allowed to run, or in an example not forming part of the scope of protection may be a rotation speed value in a specific rotation speed range. For example, the rotation speed range may be a range between a critical point A (for example, the critical point A may be determined based on the experimental data of the power assembly system) and a maximum rotation speed value. The first torque value is a maximum torque that can be borne by the motor, or in an example not forming part of the scope of protection may be a torque value in a specific torque range. For example, the torque range may be a range between a critical point B (for example, the critical point B may be determined based on the experimental data of the power assembly system) and a maximum torque value. In this implementation, accuracy of the correspondence between an operating point and a switching frequency (or the correspondence between a region and a switching frequency) can be ensured, and a case in which temperature of the motor and temperature of the inverter cannot be effectively adjusted in the foregoing correspondence is avoided.

In this embodiment of this application, after obtaining a specific operating point, a controller may determine, based on the correspondence between an operating point and a switching frequency, a switching frequency corresponding to the operating point, and then set the switching frequency of the inverter to the determined switching frequency, so that an over-temperature state of the motor and the inverter can be avoided, to ensure normal running of the electric vehicle.

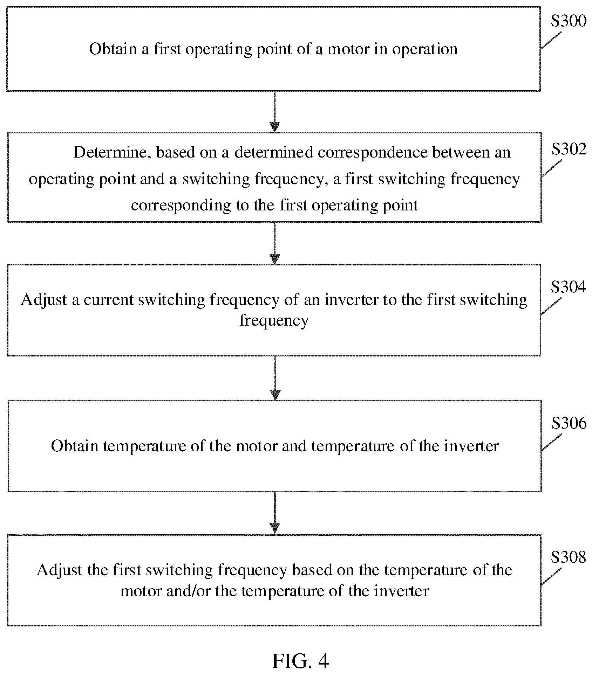

In an optional embodiment, after the current switching frequency of the inverter is adjusted to the first switching frequency, the first switching frequency may be fine-tuned based on the temperature of the motor and/or the temperature of the inverter, so that the switching frequency of the inverter is precisely controlled, to avoid an over-temperature state of the motor and the inverter. As shown in FIG. 4, the method may include but is not limited to the following steps.

Step S306: Obtain temperature of the motor and temperature of the inverter.

In this embodiment of this application, a temperature sensor may monitor the temperature of the motor and the temperature of the inverter. Then, the temperature sensor transmits the monitored temperature of the motor and the monitored temperature of the inverter to the controller, so that the controller controls the switching frequency of the inverter based on the obtained temperature.

In this embodiment of this application, the temperature of the motor may include temperature of a rotor of the motor and/or temperature of a coil of the motor. Generally, the rotor of the motor is a rotating component in the motor. Heat is easily generated during rotation of the rotor of the motor. The coil of the motor is generally an annular wire winding. For example, heat is easily generated on a resistor of the coil during running of the motor.

In this embodiment of this application, the temperature of the inverter includes temperature of a core of the inverter.

Step S308: Adjust the first switching frequency based on the temperature of the motor and/or the temperature of the inverter.

For example, the first switching frequency may be adjusted based on the temperature of the motor.

Specifically, different adjustment policies may be executed for different temperature of the motor. For example, when the temperature of the motor is greater than a first temperature value, the first switching frequency is increased by a first value. For another example, when the temperature of the motor is between the first temperature value and a second temperature value, the first switching frequency is increased by a second value. For another example, when the temperature of the motor is less than a third temperature value, the first switching frequency is not adjusted.

In this embodiment of this application, the first temperature value, the second temperature value, and the third temperature value are determined based on a highest operating temperature value that can be borne by the motor, and the first temperature value, the second temperature value, and the third temperature value are in a decreasing trend. For example, the highest temperature value that can be borne by the motor is T1; the first temperature value is $aT_1$, where $0<a<1$, for example, a=0.9; the second temperature value is $bT_1$, where $0<b<a<1$, for example, b=0.8; and the third temperature value is $cT_1$, where $0<c<b<a<1$, for example, c=0.7.

In this embodiment of this application, the first value, the second value, and the third value are positive values. For example, the first value may be 1 kHz, and the second value may be 0.6 kHz.

It should be noted that, in this embodiment of this application, only when determining that the rotation speed of the motor is greater than a specified threshold M, the controller may perform the step of adjusting the first switching frequency based on the temperature of the motor. This is not specifically limited in this application. It should be noted that the threshold M may be the same as or different from the first rotation speed value described in the foregoing embodiment.

For example, the first switching frequency may be adjusted based on the temperature of the inverter.

Specifically, different adjustment policies may be executed for different temperature of the inverter. For example, when the temperature of the inverter is greater than a fourth temperature value, the first switching frequency is decreased by a third value. For another example, when the temperature of the inverter is between the fourth temperature value and a fifth temperature value, the first switching frequency is decreased by a fourth value. For another example, when the temperature of the inverter is less than a sixth temperature value, the first switching frequency is not adjusted.

In this embodiment of this application, the fourth temperature value, the fifth temperature value, and the sixth temperature value are determined based on a highest operating temperature value that can be borne by the inverter, and the fourth temperature value, the fifth temperature value, and the sixth temperature value are in a decreasing trend. For example, the highest temperature value that can be borne by the inverter is T2; the forth temperature value is $dT_2$, where $0<d<1$, for example, d=0.9; the fifth temperature value is $eT_2$, where $0<e<d<1$, for example, e=0.8; and the sixth temperature value is $fT_2$, where $0<f<e<d<1$, for example, f=0.7.

In this embodiment of this application, the third value and the fourth value may be positive values. For example, the third value may be 1 kHz, and the fourth value may be 0.6 kHz.

It should be noted that, in this embodiment of this application, only when determining that the torque of the motor is greater than a specified threshold N, the controller may perform the step of adjusting the first switching frequency based on the temperature of the motor. This is not specifically limited in this application. It should be noted that the threshold N may be the same as or different from the first torque value described in the foregoing embodiment.

For example, the first switching frequency may be adjusted based on the temperature of the motor and the temperature of the inverter.

Specifically, an implementation process of adjusting the first switching frequency based on the temperature of the motor and the temperature of the inverter may include: when the temperature of the motor is less than a specified first threshold and the temperature of the inverter is greater than a specified second threshold, decreasing the first switching frequency; or when the temperature of the motor is greater than the specified first threshold and the temperature of the inverter is less than the specified second threshold, increasing the first switching frequency.

In this embodiment of this application, the first threshold and the second threshold may be the same or different. This is not specifically limited in this application.

It should be noted that, in actual application, in some special cases, when neither the temperature of the motor or the temperature of the inverter reaches a limit high temperature state, the first switching frequency of the inverter may not be adjusted due to other performance considerations (for example, to enable the motor to have optimal performance).

In this embodiment of this application, the controller may fine-tune the first switching frequency based on the temperature of the motor and/or the temperature of the inverter, so that the switching frequency of the inverter is precisely controlled, to avoid an over-temperature state of the motor and the inverter, and ensure normal running of the electric vehicle.

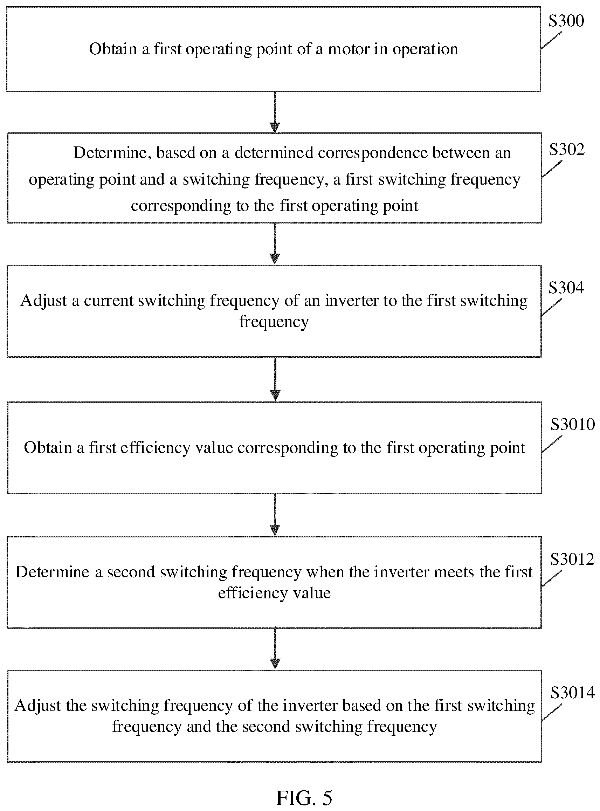

In an optional embodiment, after the switching frequency of the inverter is adjusted to the first switching frequency, the first switching frequency may be further fine-tuned based on efficiency of the motor, efficiency of the inverter, and efficiency of the speed reducer, so that the switching frequency of the inverter is precisely controlled, to avoid an over-temperature state of the motor and the inverter. As shown in FIG. 5, the method may include but is not limited to the following steps.

Step S3010: Obtain a first efficiency value corresponding to the first operating point, where the first efficiency value is an efficiency value that is of efficiency of the motor, efficiency of the inverter, and efficiency of the speed reducer and that meets a preset condition.

In this embodiment of this application, the first efficiency value corresponding to the first operating point may be determined in advance based on a determined efficiency map of the motor, a determined efficiency map of the inverter, and a determined efficiency map of the speed reducer. Herein, the efficiency map of the motor is used to represent efficiency values of the motor at different switching frequencies of the inverter, the efficiency map of the inverter is used to represent efficiency values of the inverter at different switching frequencies of the inverter, and the efficiency map of the speed reducer is used to represent efficiency values of the speed reducer at different switching frequencies of the inverter.

Specifically, the efficiency map of the motor, also referred to as a contour line diagram and a nephogram, is a data line graph generated based on test data of the motor, and is used to reflect distribution of efficiency of the motor at different rotation speeds and torque.

The efficiency map of the inverter is a data line graph generated based on test data of the inverter, and is used to reflect distribution of efficiency of the inverter.

The efficiency map of the speed reducer is a data line graph generated based on test data of the speed reducer, and is used to reflect distribution of efficiency of the speed reducer.

It should be noted that, in this embodiment of this application, the test data of the motor, the test data of the inverter, and the test data of the speed reducer may be test data obtained in a specific test condition. For example, the specific test condition may include a normal test condition, or may include a limit test condition.

In this embodiment of this application, the first efficiency value is the efficiency value that is of the efficiency of the motor, the efficiency of the inverter, and the efficiency of the speed reducer and that meets the preset condition. For example, the first efficiency value may be an efficiency value when the efficiency of the motor reaches a maximum efficiency value, the efficiency of the inverter reaches a maximum efficiency value, and the efficiency of the speed reducer reaches a maximum efficiency value. For another example, the first efficiency value may be an efficiency value when the efficiency of the motor reaches a maximum efficiency value and the efficiency of the inverter and the efficiency of the speed reducer are greater than a specific threshold. For another example, the first efficiency value may be an efficiency value when the efficiency of the motor, the efficiency of the inverter, and the efficiency of the speed reducer are all greater than a specific threshold. It may be understood that the first efficiency value may be represented in other forms. The forms are not listed one by one herein.

Step S3012: Determine a second switching frequency when the inverter meets the first efficiency value.

After the first efficiency value corresponding to the first operating point is determined, a switching frequency when the inverter meets the first efficiency value may be determined by using the efficiency map of the inverter. For example, the switching frequency is the second switching frequency.

Step S3014: Adjust the switching frequency of the inverter based on the first switching frequency and the second switching frequency.

In this embodiment of this application, an implementation process of adjusting the switching frequency of the inverter based on the first switching frequency and the second switching frequency may include the following two cases.

Case 1: When it is determined that a difference between the first switching frequency and the second switching frequency is greater than a third threshold, the first switching frequency of the inverter is adjusted to the second switching frequency.

In this embodiment of this application, the third threshold may be 0.1, 0.5, or the like. It may be understood that a specific application scenario needs to be considered for setting the third threshold. This is not specifically limited.

In this embodiment of this application, the first switching frequency and the second switching frequency may be represented as follows: The first switching frequency is equal to the second switching frequency, the first switching frequency is greater than the second switching frequency, and the second switching frequency is greater than the first switching frequency.

As described above, the first switching frequency is determined based on the correspondence between an operating point and a switching frequency (which may alternatively be the correspondence between a region and a switching frequency), and the second switching frequency is determined based on the efficiency of the motor, the efficiency of the inverter, and the efficiency of the speed reducer. Therefore, it may be learned that, compared with setting the switching frequency of the inverter to the first switching frequency, if the switching frequency of the inverter is set to the second switching frequency, the temperature of the motor and the temperature of the inverter can be better adjusted, to avoid an over-temperature state of the motor and the inverter. Based on this, when it is determined that the difference between the first switching frequency and the second switching frequency is greater than the third threshold, the first switching frequency of the inverter is adjusted to the second switching frequency. For example, the first switching frequency is 8 kHz, the second switching frequency is 8.5 kHz, and the third threshold is 0.2 kHz. When determining that the difference (0.5) between the first switching frequency and the second switching frequency is greater than the third threshold (0.2), the controller adjusts the first switching frequency of the inverter to the second switching frequency.

Case 2: When it is determined that a difference between the first switching frequency and the second switching frequency is less than or equal to a third threshold, keep the switching frequency of the inverter as the first switching frequency, or adjust the first switching frequency of the inverter to the second switching frequency.

When it is determined that the difference between the first switching frequency and the second switching frequency is less than or equal to the third threshold, the switching frequency of the inverter is kept as the first switching frequency, or the first switching frequency of the inverter is adjusted to the second switching frequency. In this way, an over-temperature state of the temperature of the motor and the temperature of the inverter can be avoided, and normal running of the electric vehicle is ensured.

It should be noted that, in this embodiment of this application, when it is determined that the difference between the first switching frequency and the second switching frequency is less than the third threshold, to better avoid an over-temperature state of the temperature of the motor and the temperature of the inverter, the controller may choose to adjust the first switching frequency of the inverter to the second switching frequency.

It may be understood that, in this embodiment of this application, when it is determined that the first switching frequency and the second switching frequency are the same, it may be considered that the first switching frequency and the second switching frequency meet the case 2 described above.

In this embodiment of this application, the controller may fine-tune the first switching frequency based on the efficiency of the motor, the efficiency of the inverter, and the efficiency of the speed reducer, so that the switching frequency of the inverter is precisely controlled, to avoid an over-temperature state of the motor and the inverter, and ensure normal running of the electric vehicle.

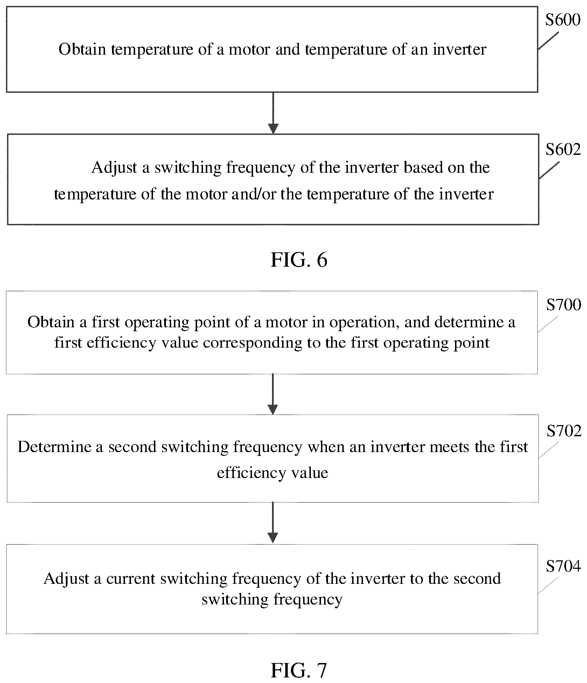

FIG. 6 shows another method for adjusting a switching frequency of an inverter according to an embodiment of this application. The method may be used when the inverter is at an initial switching frequency (for example, the initial switching frequency is 8 kHz). A controller may adjust the initial switching frequency of the inverter based on temperature of a motor and/or temperature of the inverter while the initial switching frequency of the inverter is considered, or the controller may directly adjust the switching frequency of the inverter based on the temperature of the motor and/or the temperature of the inverter without considering the initial switching frequency of the inverter. The method may include but is not limited to the following steps.

Step S600: Obtain temperature of the motor and temperature of the inverter.

Step S602: Adjust a switching frequency of the inverter based on the temperature of the motor and/or the temperature of the inverter.

In this embodiment of this application, for specific implementation of step S600 and step S602, refer to the foregoing step S306 and step S308. Details are not described herein again.

In this embodiment of this application, the controller may adjust the switching frequency of the inverter based on the temperature of the motor and/or the temperature of the inverter, to avoid an over-temperature state of the motor and the inverter, and ensure normal running of an electric vehicle.

FIG. 7 shows another method for adjusting a switching frequency of an inverter according to an embodiment of this application. The method may be used when the inverter is at an initial switching frequency (for example, the initial switching frequency is 8 kHz). A controller may adjust the initial switching frequency of the inverter based on efficiency of a motor, efficiency of the inverter, and efficiency of a speed reducer while the initial switching frequency of the inverter is considered, or the controller may directly adjust a switching frequency of the inverter based on the efficiency of the motor, the efficiency of the inverter, and the efficiency of the speed reducer without considering the initial switching frequency of the inverter. The method may include but is not limited to the following steps.

Step S700: Obtain a first operating point of the motor in operation, and determine a first efficiency value corresponding to the first operating point, where the first efficiency value is an efficiency value that is of efficiency of the motor, efficiency of the inverter, and efficiency of the speed reducer and that meets a preset condition.

As described above, the controller may obtain an electrical parameter of the motor in operation. For example, the electrical parameter may include a current, a voltage, power, and the like of the motor. Then, the controller obtains the first operating point of the motor based on the electrical parameter of the motor. After the first operating point of the motor is determined, the first efficiency value corresponding to the first operating point may be determined based on a predetermined efficiency map of the motor, a predetermined efficiency map of the inverter, and a predetermined efficiency map of the speed reducer. Herein, the efficiency map of the motor is used to represent efficiency values of the motor at different switching frequencies of the inverter, the efficiency map of the inverter is used to represent efficiency values of the inverter at different switching frequencies of the inverter, and the efficiency map of the speed reducer is used to represent efficiency values of the speed reducer at different switching frequencies of the inverter.

Specifically, the efficiency map of the motor, also referred to as a contour line diagram and a nephogram, is a data line graph generated based on test data of the motor, and is used to reflect distribution of efficiency of the motor at different rotation speeds and torque.

The efficiency map of the inverter is a data line graph generated based on test data of the inverter, and is used to reflect distribution of efficiency of the inverter.

The efficiency map of the speed reducer is a data line graph generated based on test data of the speed reducer, and is used to reflect distribution of efficiency of the speed reducer.

In this embodiment of this application, the first efficiency value is the efficiency value that is of the efficiency of the motor, the efficiency of the inverter, and the efficiency of the speed reducer and that meets the preset condition. For example, the first efficiency value may be an efficiency value when the efficiency of the motor reaches a maximum efficiency value, the efficiency of the inverter reaches a maximum efficiency value, and the efficiency of the speed reducer reaches a maximum efficiency value. For another example, the first efficiency value may be an efficiency value when the efficiency of the motor reaches a maximum efficiency value and the efficiency of the inverter and the efficiency of the speed reducer are greater than a specific threshold. For another example, the first efficiency value may be an efficiency value when the efficiency of the motor, the efficiency of the inverter, and the efficiency of the speed reducer are all greater than a specific threshold. It may be understood that the first efficiency value may be represented in other forms. The forms are not listed one by one herein.

Step S702: Determine a second switching frequency when the inverter meets the first efficiency value.

After the first efficiency value corresponding to the first operating point is determined, a switching frequency when the inverter meets the first efficiency value may be determined by using the efficiency map of the inverter. For example, the switching frequency is the second switching frequency.

Step S704: Adjust a current switching frequency of the inverter to the second switching frequency.

After the second switching frequency corresponding to the first operating point is determined, the current switching frequency of the inverter is adjusted to the second switching frequency. Herein, the current switching frequency may be a switching frequency at which the inverter works before adjustment.

In this embodiment of this application, after obtaining a specific operating point, the controller may obtain, based on the efficiency of the motor, the efficiency of the inverter, and the efficiency of the speed reducer, an efficiency value that is corresponding to the operating point and that meets the preset condition, and then determine a switching frequency at which the inverter meets the efficiency value, and then set the switching frequency of the inverter to the determined switching frequency, so that an over-temperature state of the motor and the inverter can be avoided, to ensure normal running of an electric vehicle.

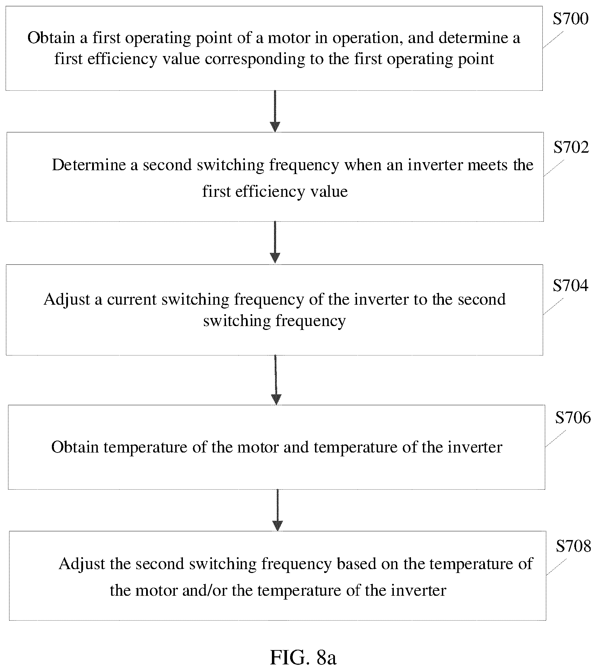

In some optional embodiments, after the switching frequency of the inverter is adjusted to the second switching frequency, the second switching frequency may be fine-tuned based on temperature of the motor and/or temperature of the inverter, so that the switching frequency of the inverter is precisely controlled, to avoid an over-temperature state of the motor and the inverter. As shown in FIG. 8a, the method may include but is not limited to the following steps.

Step S706: Obtain temperature of the motor and temperature of the inverter.

In this embodiment of this application, a temperature sensor may monitor the temperature of the motor and the temperature of the inverter. Then, the temperature sensor transmits the monitored temperature of the motor and the monitored temperature of the inverter to the controller, so that the controller controls the switching frequency of the inverter based on the obtained temperature.

In this embodiment of this application, the temperature of the motor may include temperature of a rotor of the motor and/or temperature of a coil of the motor.

Generally, the rotor of the motor is a rotating component in the motor. Heat is easily generated during rotation of the rotor of the motor. The coil of the motor is generally an annular wire winding. For example, heat is easily generated on a resistor of the coil during running of the motor.

In this embodiment of this application, the temperature of the inverter includes temperature of a core of the inverter.

Step S708: Adjust the second switching frequency based on the temperature of the motor and/or the temperature of the inverter.

For example, the second switching frequency may be adjusted based on the temperature of the motor.

Specifically, different adjustment policies may be executed for different temperature of the motor. For example, when the temperature of the motor is greater than a first temperature value, the second switching frequency is increased by a first value. For another example, when the temperature of the motor is between the first temperature value and a second temperature value, the second switching frequency is increased by a second value. For another example, when the temperature of the motor is less than a third temperature value, the second switching frequency is not adjusted.

In this embodiment of this application, the first temperature value, the second temperature value, and the third temperature value are determined based on a highest operating temperature value that can be borne by the motor, and the first temperature value, the second temperature value, and the third temperature value are in a decreasing trend. For example, the highest temperature value that can be borne by the motor is T1; the first temperature value is $aT_1$, where 0<a<1, for example, a=0.9; the second temperature value is $bT_1$, where 0<b<a<1, for example, b=0.8; and the third temperature value is $cT_1$, where 0<c<b<a<1, for example, c=0.7.

In this embodiment of this application, the first value, the second value, and the third value are positive values. For example, the first value may be 1 kHz, and the second value may be 0.6 kHz.

It should be noted that, in this embodiment of this application, only when determining that the rotation speed of the motor is greater than a specified threshold M, the controller may perform the step of adjusting the second switching frequency based on the temperature of the motor. This is not specifically limited in this application.

For example, the second switching frequency may be adjusted based on the temperature of the inverter.

Specifically, different adjustment policies may be executed for different temperature of the inverter. For example, when the temperature of the inverter is greater than a fourth temperature value, the second switching frequency is decreased by a third value. For another example, when the temperature of the inverter is between the fourth temperature value and a fifth temperature value, the second switching frequency is decreased by a fourth value. For another example, when the temperature of the inverter is less than a sixth value, the second switching frequency is not adjusted.

In this embodiment of this application, the fourth temperature value, the fifth temperature value, and the sixth temperature value are determined based on a highest operating temperature value that can be borne by the inverter, and the fourth temperature value, the fifth temperature value, and the sixth temperature value are in a decreasing trend. For example, the highest temperature value that can be borne by the inverter is T2; the first temperature value is $dT_2$, where 0<d<1, for example, d=0.9; the second temperature value is $eT_2$, where 0<e<d<1, for example, b=0.8; and the third temperature value is $fT_2$, where 0<f<e<d<1, for example, f=0.7.

In this embodiment of this application, the third value and the fourth value may be positive values. For example, the third value may be 1 kHz, and the fourth value may be 0.6 kHz.

It should be noted that, in this embodiment of this application, only when determining that the torque of the motor is greater than a specified threshold N, the controller may perform the step of adjusting the second switching frequency based on the temperature of the motor. This is not specifically limited in this application.

For example, the second switching frequency may be adjusted based on the temperature of the motor and the temperature of the inverter.

Specifically, an implementation process of adjusting the second switching frequency based on the temperature of the motor and the temperature of the inverter may include: when the temperature of the motor is less than a specified first threshold and the temperature of the inverter is greater than a specified second threshold, decreasing the second switching frequency; or when the temperature of the motor is greater than the specified first threshold and the temperature of the inverter is less than the specified second threshold, increasing the second switching frequency.

In this embodiment of this application, the first threshold and the second threshold may be the same or different. This is not specifically limited in this application. It should be noted that, in actual application, in some special cases, when neither the temperature of the motor or the temperature of the inverter reaches a limit high temperature state, the second switching frequency of the inverter may not be adjusted due to other performance considerations (for example, to enable the motor to have optimal performance).

In this embodiment of this application, the controller may fine-tune the second switching frequency based on the temperature of the motor and/or the temperature of the inverter, so that the switching frequency of the inverter is precisely controlled, to avoid an overtemperature state of the motor and the inverter, and ensure normal running of the electric vehicle.

It should be noted that in the foregoing plurality of method embodiments, based on a relationship between a current of the motor and the torque of the motor, an operating point may further include the current of the motor and the rotation speed of the motor. Specifically, the relationship between the current of the motor and the torque of the motor may be described as follows: For example, power of the motor may be obtained based on formula (3), and the formula (3) may be represented as follows:

$$P = \frac{Tn}{9550} \quad (3),$$

where

T represents the torque (unit: Nm) of the motor, and n represents the rotation speed (unit: r/min).

For example, the power of the motor may be obtained based on formula (4). The formula (4) may be represented as follows:

$$P = UI \quad (4),$$

where

U represents the voltage of the motor, and I represents the current of the motor.

The formula (3) may be substituted into the formula (4) to obtain formula (5). The formula (5) may be represented as follows:

$$T = \frac{9.55UI}{n} \quad (5)$$

It may be learned from the formula (5) that, when the rotation speed and the voltage of the motor remain unchanged, the torque of the motor is in direct proportion to the current of the motor. In other words, a larger current flowing through the motor leads to larger torque of the motor.

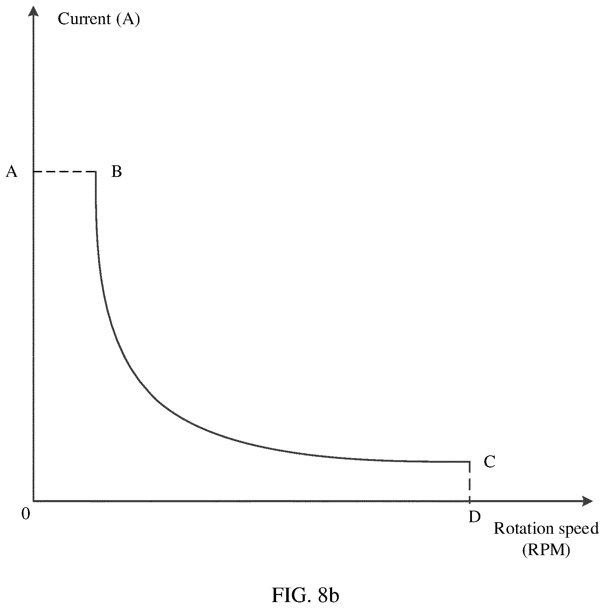

In this case, during sorting and analysis of experimental data of a power assembly system, a spatial coordinate system may be constructed based on the operating point of the motor. Herein, the operating point of the motor includes the current of the motor and the rotation speed of the motor. In this case, in the spatial coordinate system described above, the rotation speed of the motor may be used as a horizontal direction, and the current of the motor is used as a vertical direction. For example, the spatial coordinate system may be shown in FIG. 8b. For example, a correspondence between an operating point and a switching frequency may include but is not limited to that shown in Table 3.

**Table 3**

| Operating point | Switching frequency |
|---|---|
| Operating point 1 | Switching frequency 1 |
| Operating point 2 | Switching frequency 2 |

(continued)

| Operating point | Switching frequency |
|---|---|
| Operating point 3 | Switching frequency 2 |
| Operating point 4 | Switching frequency 3 |
| ... | ... |
| Operating point n | Switching frequency 3 |

Based on this, a running region ABCDO of the motor may be further divided based on the current of the motor or the rotation speed of the motor, to obtain a plurality of regions. For example, a correspondence between a region and a switching frequency may be shown in Table 4.

**Table 4**

| Region | Switching frequency |
|---|---|
| Region 1 | Switching frequency 1 |
| Region 2 | Switching frequency 2 |
| Region 3 | Switching frequency 3 |
| Region 4 | Switching frequency 4 |
| ... | ... |
| Region n | Switching frequency n |

Therefore, the switching frequency of the inverter may be adjusted based on the correspondence between a region and a switching frequency shown in Table 4. For a specific implementation process, refer to the foregoing descriptions. Details are not described herein again.

It should be further noted that, in the foregoing plurality of method embodiments, that the method described in this application is performed by a controller in the power assembly system is merely an example, and should not constitute a limitation. In actual application, the method described in this application may also be performed by using the processor in the computer system shown in FIG. 1b.

It should be further noted that, in the foregoing plurality of method embodiments, a core of the inverter may be a silicon-based IGBT chip, or may be a silicon carbide SiC chip. Generally, a switching frequency adjustment range of the silicon-based IGBT chip may be 8 kHz to 10 kHz, and a switching frequency adjustment range of the silicon carbide SiC chip may be 8 kHz to 20 kHz. The adjustment ranges are large, and this means that a regulation and control capability for temperature of the motor and temperature of the inverter is improved. Based on this, the method described in this application has a better effect when the method is applied to the silicon carbide SiC chip.

The methods in embodiments of this application are described in detail above, and related apparatuses involved in this application are specifically described below.

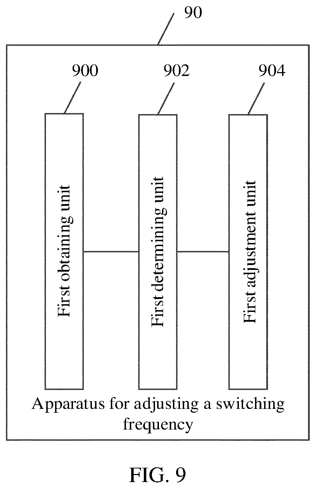

FIG. 9 shows an apparatus 90 for adjusting a switching frequency according to an embodiment of this application. The apparatus 90 may be a component in an electric vehicle, such as a chip or an integrated circuit. The apparatus 90 may include:

> a first obtaining unit 900, configured to obtain a first operating point of a motor in operation, where the first operating point includes torque and a rotation speed;
> a first determining unit 902, configured to determine, based on a determined correspondence between an operating point and a switching frequency, a first switching frequency corresponding to the first operating point; and
> a first adjustment unit 904, configured to adjust a current switching frequency of the inverter to the first switching frequency.

In a possible implementation, the correspondence between an operating point and a switching frequency is a correspondence between an operating type and a switching frequency, and a plurality of operating points that belong to a same operating type correspond to a same switching frequency. The first determining unit 902 is specifically configured to:
if it is determined that the first operating point belongs to a first operating type, determine a first switching frequency of the first operating type based on the determined correspondence between an operating type and a switching frequency, where the first operating type is one of a plurality of operating types determined based on the torque or the rotation speed of the motor.

In a possible implementation, when the rotation speed of the motor is greater than a first rotation speed value, the first switching frequency is greater than the current switching frequency, and when the torque of the motor is greater than a first torque value, the first switching frequency is less than the current switching frequency.

In a possible implementation, the apparatus 90 further includes:

> a second obtaining unit 906, configured to obtain temperature of the motor and temperature of the inverter; and
> a second adjustment unit 908, configured to: when the temperature of the motor is less than a specified first threshold and the temperature of the inverter is greater than a specified second threshold, decrease the first switching frequency; or when the temperature of the motor is greater than the specified first threshold and the temperature of the inverter is less than the specified second threshold, increase the first switching frequency.

In a possible implementation, the apparatus further includes:

> a third obtaining unit 9010, configured to obtain a first efficiency value corresponding to the first operating point, where the first efficiency value is an efficiency value that is of efficiency of the motor, efficiency of the inverter, and efficiency of a speed reducer and that meets a preset condition;
> a second determining unit 9012, configured to determine a second switching frequency when the inverter meets the first efficiency value; and
> a third adjustment unit 9014, configured to adjust the switching frequency of the inverter based on the first switching frequency and the second switching frequency.

In a possible implementation, the third obtaining unit 9010 is specifically configured to:
determine, based on a predetermined efficiency map of the motor, a predetermined efficiency map of the inverter, and a predetermined efficiency map of the speed reducer, the first efficiency value corresponding to the first operating point, where the efficiency map of the motor is used to represent efficiency values of the motor at different switching frequencies of the inverter, the efficiency map of the inverter is used to represent efficiency values of the inverter at different switching frequencies of the inverter, and the efficiency map of the speed reducer is used to represent efficiency values of the speed reducer at different switching frequencies of the inverter.

In a possible implementation, the third adjustment unit 9014 is specifically configured to:
when it is determined that a difference between the first switching frequency and the second switching frequency is greater than a third threshold, adjust the first switching frequency of the inverter to the second switching frequency, or when it is determined that the difference between the first switching frequency and the second switching frequency is less than or equal to the third threshold, keep the switching frequency of the inverter as the first switching frequency.

It should be noted herein that division into the foregoing plurality of units is merely logical division based on functions, and is not intended to limit a specific structure of the apparatus 90. During specific implementation, some functional modules may be subdivided into more fine functional modules, and some functional modules may be combined into one functional module. However, regardless of whether the functional modules are subdivided or combined, general procedures performed by the apparatus 90 in a process of adjusting the switching frequency of the inverter are the same. For example, the plurality of units may also be understood as a communication unit and a processing unit. Usually, each unit corresponds to respective program code (or a program instruction). When the program code corresponding to the unit is run on a processor, the unit executes a corresponding procedure to implement a corresponding function.

It should be noted that for specific implementation of the foregoing functional units, refer to related descriptions in the foregoing method embodiments. Details are not described again in this embodiment of this application.

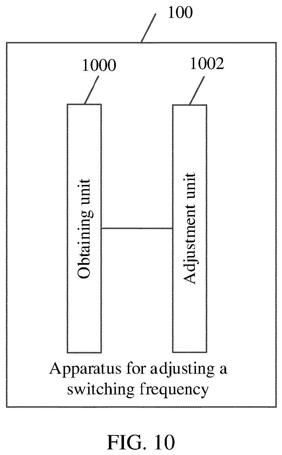

FIG. 10 shows another apparatus 100 for adjusting a switching frequency according to an embodiment of this application. The apparatus 100 may be a component in an electric vehicle, such as a chip or an integrated circuit. The apparatus 100 may include:

an obtaining unit 1000, configured to obtain temperature of a motor and temperature of an inverter; and an adjustment unit 1002, configured to: when the temperature of the motor is less than a specified first threshold and the temperature of the inverter is greater than a specified second threshold, decrease a switching frequency of the inverter; or when the temperature of the motor is greater than the specified first threshold and the temperature of the inverter is less than the specified second threshold, increase the switching frequency of the inverter.

It should be noted herein that division into the foregoing plurality of units is merely logical division based on functions, and is not intended to limit a specific structure of the apparatus 100. During specific implementation, some functional modules may be subdivided into more fine functional modules, and some functional modules may be combined into one functional module. However, regardless of whether the functional modules are subdivided or combined, general procedures performed by the apparatus 100 in a process of adjusting the switching frequency of the inverter are the same. For example, the plurality of units may also be understood as a communication unit and a processing unit. Usually, each unit corresponds to respective program code (or a program instruction). When the program code corresponding to the unit is run on a processor, the unit executes a corresponding procedure to implement a corresponding function.

It should be noted that for specific implementation of the foregoing functional units, refer to related descriptions in the foregoing method embodiments. Details are not described again in this embodiment of this application.

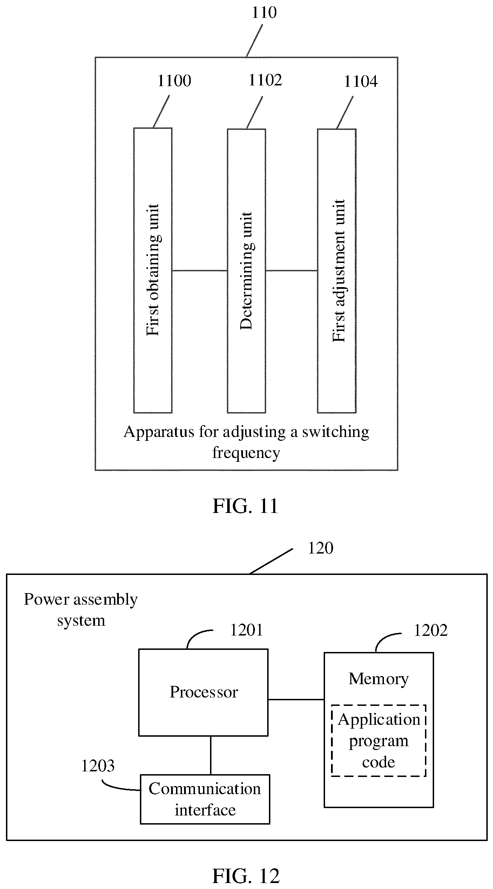

FIG. 11 shows another apparatus 110 for adjusting a switching frequency according to an embodiment of this application. The apparatus 110 may be a component in an electric vehicle, such as a chip or an integrated circuit. The apparatus 110 may include:

a first obtaining unit 1100, configured to: obtain a first operating point of a motor in operation, and determine a first efficiency value corresponding to the first operating point, where the first efficiency value is an efficiency value that is of efficiency of the motor, efficiency of the inverter, and efficiency of a speed reducer and that meets a preset condition; a determining unit 1102, configured to determine a second switching frequency when the inverter meets the first efficiency value; and a first adjustment unit 1104, configured to adjust a current switching frequency of the inverter to the second switching frequency.

In a possible implementation, the apparatus 110 further includes:

a second obtaining unit 1106, configured to obtain temperature of the motor and temperature of the inverter; and

a second adjustment unit 1108, configured to: when the temperature of the motor is less than a specified first threshold and the temperature of the inverter is greater than a specified second threshold, decrease the second switching frequency; or when the temperature of the motor is greater than the specified first threshold and the temperature of the inverter is less than the specified second threshold, increase the second switching frequency.

It should be noted herein that division into the foregoing plurality of units is merely logical division based on functions, and is not intended to limit a specific structure of the apparatus 110. During specific implementation, some functional modules may be subdivided into more fine functional modules, and some functional modules may be combined into one functional module. However, regardless of whether the functional modules are subdivided or combined, general procedures performed by the apparatus 110 in a process of adjusting the switching frequency of the inverter are the same. For example, the plurality of units may also be understood as a communication unit and a processing unit. Usually, each unit corresponds to respective program code (or a program instruction). When the program code corresponding to the unit is run on a processor, the unit executes a corresponding procedure to implement a corresponding function.

It should be further noted that for specific implementation of the foregoing functional units, refer to related descriptions in the foregoing method embodiments. Details are not described again in this embodiment of this application.

FIG. 12 is a schematic diagram of a structure of a power assembly system according to an embodiment of this application. A power assembly system 120 includes at least one processor 1201, at least one memory 1202, and at least one communication interface 1203. In addition, the power assembly system may further include another common component, such as an input module. This is not described in detail herein.

The at least one processor 1201 is a module for performing an arithmetic operation and a logical operation, and may be one of or a combination of a plurality of processing modules such as a central processing unit (central processing unit, CPU), a graphics processing unit (graphics processing unit, GPU), a microprocessor unit (microprocessor unit, MPU), a field-programmable gate array (Field-Programmable Gate Array, FPGA), and an application-specific integrated circuit (Application-Specific Integrated Circuit, ASIC).

The communication interface 1203 is configured to communicate with another device or another communication network.

The memory 1202 may be a read-only memory (ROM) or another type of static storage device capable of storing static information and instructions, or a random access memory (RAM) or another type of dynamic storage device capable of storing information and instructions, or may be an electrically erasable programmable read-only memory (EEPROM), a compact disc read-only memory (CD-ROM) or other optical disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in an instruction or data structure form and that can be accessed by a computer, but is not limited thereto. The memory may exist independently, and is connected to the processor through the bus. The memory may alternatively be integrated with the processor.

The memory 1202 is configured to store and execute application program code of the foregoing solution, and the processor 1201 controls the execution. The processor 1201 is configured to execute the application program code stored in the memory 1202. For example, the code stored in the memory 1202 may perform the foregoing method for adjusting a switching frequency of an inverter provided in FIG. 3a, FIG. 4, FIG. 5, FIG. 6, FIG. 7, or FIG. 8a.

It should be noted that for a function of the power assembly system 120 described in this embodiment of this application, refer to related descriptions in the foregoing method embodiments in FIG. 3a, FIG. 4, FIG. 5, FIG. 6, FIG. 7, or FIG. 8a. Details are not described herein again.

An embodiment of this application further provides a computer-readable storage medium. The computer-readable storage medium stores a computer program. When the computer program is run on one or more processors, the method in any one embodiment shown in FIG. 3a, FIG. 4, FIG. 5, FIG. 6, FIG. 7, or FIG. 8a is performed.

An embodiment of this application further provides a chip system. The chip system includes at least one processor, a memory, and an interface circuit. The interface circuit is configured to provide an information input and/or output for the at least one processor, the at least one memory stores a computer program, and when the computer program is run on one or more processors, the method for adjusting a switching frequency of an inverter in any embodiment shown in FIG. 3a, FIG. 4, FIG. 5, FIG. 6, FIG. 7, or FIG. 8a is performed.

An embodiment of this application further provides an electric vehicle. The electric vehicle includes a power assembly system (for example, the power assembly system may include a controller, a motor, an inverter, and a speed reducer), and the controller is the controller in any one of the embodiments shown in FIG. 3a, FIG. 4, FIG. 5, FIG. 6, FIG. 7, or FIG. 8a, or may be the processor in the computer system shown in FIG. 1b.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially implemented. The computer may be a general-purpose computer, a dedicated computer, a computer network, or another programmable apparatus. The computer instructions may be stored in a computer-readable storage medium, or may be transmitted by using a computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (SSD)), or the like.

Sequence adjustment, combination, or deletion may be performed on the steps in the method embodiments of this application based on an actual requirement.

The foregoing descriptions are merely specific implementations of this application, but the protection scope of this application is not limited thereto. Any variation or replacement readily figured out by a person skilled in the art within the technical scope disclosed in this application shall fall within the protection scope of this application.

It may be understood that a person of ordinary skill in the art may be aware that, in combination with the examples described in the embodiments disclosed in this application, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art can appreciate that functions described in connection with various illustrative logical blocks, modules, and algorithm steps disclosed and described herein may be implemented by hardware, software, firmware, or any combination thereof. If implemented by software, the functions described by various illustrative logical blocks, modules, and steps may be stored or transmitted as one or more instructions or code on a computer-readable medium and executed by a hardware-based processing unit. The computer-readable medium may include a computer-readable storage medium corresponding to a tangible medium, such as a data storage medium, or any communication medium that facilitates transmission of a computer program from one place to another (for example, based on a communication protocol). In this manner, the computer-readable medium may be generally corresponding to: (1) a non-transitory tangible computer-readable storage medium, or (2) a communication medium such as a signal or a carrier. The data storage medium may be any available medium that can be accessed by one or more computers or one or more processors to retrieve instructions, code, and/or data structures for implementing the technologies described in this application. A computer program product may include a computer-readable medium.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for adjusting a switching frequency of an inverter, wherein a current output by the inverter is used to drive rotation of a motor, and the method comprises:

    obtaining (S300) a first operating point of the motor in operation, wherein the first operating point comprises torque and a rotation speed;
    determining (S302), based on a determined correspondence between an operating point and a switching frequency, a first switching frequency corresponding to the first operating point of the motor in operation; and
    adjusting (S304) a current switching frequency of the inverter to the first switching frequency;
    **characterized in that** when the rotation speed of the motor is greater than a first rotation speed value, the first switching frequency is greater than the current switching frequency, and when the torque of the motor is greater than a first torque value, the first switching frequency is less than the current switching frequency;
    and **in that** the first rotation speed value is a maximum rotation speed at which the motor is allowed to run, and the first torque value is a maximum torque that is borne by the motor.

**2.** The method according to claim 1, wherein the correspondence between an operating point and a switching frequency is a correspondence between an operating type and a switching frequency, and a plurality of operating points that belong to a same operating type correspond to a same switching frequency; and the determining, based on a determined correspondence between an operating point and a switching frequency, a first switching frequency corresponding to the first operating point comprises:
if it is determined that the first operating point belongs to a first operating type, determining a first switching frequency of the first operating type based on the determined correspondence between an operating type and a switching frequency, wherein the first operating type is one of a plurality of operating types determined based on the torque or the rotation speed of the motor.

**3.** The method according to any one of claims 1 to 2, wherein the method further comprises:

obtaining temperature of the motor and temperature of the inverter; and
when the temperature of the motor is less than a specified first threshold and the temperature of the inverter is greater than a specified second threshold, decreasing the first switching frequency; or
when the temperature of the motor is greater than the specified first threshold and the temperature of the inverter is less than the specified second threshold, increasing the first switching frequency.

**4.** The method according to any one of claims 1 to 2, wherein the method further comprises:

obtaining a first efficiency value corresponding to the first operating point, wherein the first efficiency value is an efficiency value when the efficiency of the motor reaches a maximum efficiency value, the efficiency of the inverter reaches a maximum efficiency value, and the efficiency of the speed reducer reaches a maximum efficiency value; or is an efficiency value when the efficiency of the motor reaches a maximum efficiency value and the efficiency of the inverter and the efficiency of the speed reducer are greater than a specific threshold; or is an efficiency value when the efficiency of the motor, the efficiency of the inverter, and the efficiency of the speed reducer are all greater than a specific threshold;
determining a second switching frequency when the inverter meets the first efficiency value; and
adjusting the switching frequency of the inverter based on the first switching frequency and the second switching frequency.

**5.** The method according to claim 4, wherein the obtaining a first efficiency value corresponding to the first operating point comprises:
determining, based on a predetermined efficiency map of the motor, a predetermined efficiency map of the inverter, and a predetermined efficiency map of the speed reducer, the first efficiency value corresponding to the first operating point, wherein the efficiency map of the motor is used to represent efficiency values of the motor at different switching frequencies of the inverter, the efficiency map of the inverter is used to represent efficiency values of the inverter at different switching frequencies of the inverter, and the efficiency map of the speed reducer is used to represent efficiency values of the speed reducer at different switching frequencies of the inverter.

**6.** The method according to claim 4, wherein the adjusting the switching frequency of the inverter based on the first switching frequency and the second switching frequency comprises:

when it is determined that a difference between the first switching frequency and the second switching frequency is greater than a third threshold, adjusting the first switching frequency of the inverter to the second switching frequency; or
when it is determined that the difference between the first switching frequency and the second switching frequency is less than or equal to the third threshold, keeping the switching frequency of the inverter as the first switching frequency.

**7.** A power assembly system, wherein the power assembly system comprises a motor, an inverter, and a controller, a current output by the inverter is used to drive rotation of the motor, and the controller is configured to perform the method according to any one of claims 1 to 6.

**8.** A computer-readable storage medium, wherein the computer-readable storage medium stores a computer program, the computer program comprises program instructions, and when the program instructions are executed by the controller of the power assembly system according to claim 7, the controller is enabled to perform the method according to any one of claims 1 to 6.

**Patentansprüche**

**1.** Verfahren zum Einstellen einer Schaltfrequenz eines Wechselrichters, wobei ein Strom, der von dem Wechselrichter ausgegeben wird, verwendet wird, um eine Drehung eines Motors anzutreiben, und wobei das Verfahren umfasst:

Erhalten (S300) eines ersten Betriebspunkts des im Betrieb befindlichen Motors, wobei der erste Betriebspunkt ein Drehmoment und eine Drehzahl umfasst;
Ermitteln (S302), basierend auf einer ermittelten Entsprechung zwischen einem Betriebspunkt und einer Schaltfrequenz, einer ersten Schaltfrequenz, die dem ersten Betriebspunkt des im Betrieb befindlichen Motors entspricht; und
Einstellen (S304) einer aktuellen Schaltfrequenz des Wechselrichters auf die erste Schaltfrequenz;
**dadurch gekennzeichnet, dass**
wenn die Drehzahl des Motors größer als ein erster Drehzahlwert ist, die erste Schaltfrequenz größer als die aktuelle Schaltfrequenz ist, und wenn das Drehmoment des Motors größer als ein erster Drehmomentwert ist, die erste Schaltfrequenz geringer als die aktuelle Schaltfrequenz ist;
und dadurch, dass
der erste Drehzahlwert eine maximale Drehzahl ist, die für das Laufen des Motors erlaubt ist, und der erste Drehmomentwert ein maximales Drehmoment ist, das von dem Motor ausgehalten wird.

2. Verfahren nach Anspruch 1, wobei die Entsprechung zwischen einem Betriebspunkt und einer Schaltfrequenz eine Entsprechung zwischen einer Betriebsart und einer Schaltfrequenz ist, und wobei eine Vielzahl von Betriebspunkten, die zu einer gleichen Betriebsart gehören, einer gleichen Schaltfrequenz entsprechen; und wobei das Ermitteln, basierend auf einer ermittelten Entsprechung zwischen einem Betriebspunkt und einer Schaltfrequenz, einer ersten Schaltfrequenz, die dem ersten Betriebspunkt entspricht, umfasst:
wenn ermittelt wird, dass der erste Betriebspunkt zu einer ersten Betriebsart gehört, Ermitteln einer ersten Schaltfrequenz der ersten Betriebsart basierend auf der ermittelten Entsprechung zwischen einer Betriebsart und einer Schaltfrequenz, wobei die erste Betriebsart eine aus einer Vielzahl von Betriebsarten ist, die basierend auf dem Drehmoment oder der Drehzahl des Motors ermittelt werden.

3. Verfahren nach einem der Ansprüche 1 bis 2, wobei das Verfahren außerdem umfasst:

Erhalten einer Temperatur des Motors und einer Temperatur des Wechselrichters; und wenn die Temperatur des Motors niedriger als ein festgelegter erster Schwellenwert ist und die Temperatur des Wechselrichters höher als ein festgelegter zweiter Schwellenwert ist, Verringern der ersten Schaltfrequenz; oder
wenn die Temperatur des Motors höher als der festgelegte erste Schwellenwert ist und die Temperatur des Wechselrichters niedriger als der festgelegte zweite Schwellenwert ist, Vergrößern der ersten Schaltfrequenz.

4. Verfahren nach einem der Ansprüche 1 bis 2, wobei das Verfahren außerdem umfasst:

Erhalten eines ersten Wirkungsgradwerts, der dem ersten Betriebspunkt entspricht, wobei der erste Wirkungsgradwert ein Wirkungsgradwert ist, wenn der Wirkungsgrad des Motors einen maximalen Wirkungsgradwert erreicht, der Wirkungsgrad des Wechselrichters einen maximalen Wirkungsgradwert erreicht und der Wirkungsgrad des Untersetzungsgetriebes einen maximalen Wirkungsgradwert erreicht; oder ein Wirkungsgradwert ist, wenn der Wirkungsgrad des Motors einen maximalen Wirkungsgradwert erreicht und der Wirkungsgrad des Wechselrichters und der Wirkungsgrad des Untersetzungsgetriebes größer als ein spezifischer Schwellenwert sind; oder ein Wirkungsgradwert ist, wenn der Wirkungsgrad des Motors, der Wirkungsgrad des Wechselrichters und der Wirkungsgrad des Untersetzungsgetriebes alle größer als ein spezifischer Schwellenwert sind;
Ermitteln einer zweiten Schaltfrequenz, wenn der Wechselrichter mit dem ersten Wirkungsgradwert übereinstimmt; und
Einstellen der Schaltfrequenz des Wechselrichters basierend auf der ersten Schaltfrequenz und der zweiten Schaltfrequenz.

5. Verfahren nach Anspruch 4, wobei das Erhalten eines ersten Wirkungsgradwerts, der dem ersten Betriebspunkt entspricht, umfasst:
Ermitteln, basierend auf einer vorbestimmten Wirkungsgradzuordnung des Motors, einer vorbestimmten Wirkungsgradzuordnung des Wechselrichters und einer vorbestimmten Wirkungsgradzuordnung des Untersetzungsgetriebes, wobei der erste Wirkungsgradwert dem ersten Betriebspunkt entspricht, wobei die Wirkungsgradzuordnung des Motors verwendet wird, um die Wirkungsgradwerte des Motors bei unterschiedlichen Schaltfrequenzen des Wechselrichters darzustellen, wobei die Wirkungsgradzuordnung des Wechselrichters verwendet wird, um die Wirkungsgradwerte des Wechselrichters bei unterschiedlichen Schaltfrequenzen des Wechselrichters darzustellen, und wobei die Wirkungsgradzuordnung des Untersetzungsgetriebes verwendet wird, um die Wirkungsgradwerte des Untersetzungsgetriebes bei unterschiedlichen Schaltfrequenzen des Wechselrichters darzustellen.

6. Verfahren nach Anspruch 4, wobei das Einstellen der Schaltfrequenz des Wechselrichters basierend auf der ersten Schaltfrequenz und der zweiten Schaltfrequenz umfasst:

wenn ermittelt wird, dass ein Unterschied zwischen der ersten Schaltfrequenz und der zweiten Schaltfrequenz größer als ein dritter Schwellenwert ist, Einstellen der ersten Schaltfrequenz des Wechselrichters auf die zweite Schaltfrequenz; oder

wenn ermittelt wird, dass der Unterschied zwischen der ersten Schaltfrequenz und der zweiten Schaltfrequenz kleiner als oder gleich wie ein dritter Schwellenwert ist, Beibehalten der Schaltfrequenz des Wechselrichters als die erste Schaltfrequenz.

7. Leistungsbaugruppensystem, wobei das Leistungsbaugruppensystem einen Motor, einen Wechselrichter und eine Steuereinheit umfasst, wobei ein Strom, der von dem Wechselrichter ausgegeben wird, verwendet wird, um eine Drehung des Motors anzutreiben; und wobei die Steuereinheit konfiguriert ist zum Durchführen des Verfahrens nach einem der Ansprüche 1 bis 6.

8. Computerlesbares Speichermedium, wobei in dem computerlesbaren Speichermedium ein Computerprogramm gespeichert ist, wobei das Computerprogramm Programmanweisungen umfasst, und wobei, wenn die Programmanweisungen durch die Steuereinheit des Leistungsbaugruppensystems nach Anspruch 7 ausgeführt werden, die Steuereinheit aktiviert wird zum Durchführen des Verfahrens nach einem der Ansprüche 1 bis 6.

**Revendications**

1. Procédé pour régler la fréquence de commutation d'un onduleur, dans lequel un courant délivré par l'onduleur est utilisé pour entraîner la rotation d'un moteur, le procédé comprenant les étapes suivantes :

obtenir (S300) un premier point de fonctionnement du moteur en fonctionnement, le premier point de fonctionnement comprenant un couple et une vitesse de rotation ;

déterminer (S302), sur la base d'une correspondance déterminée entre un point de fonctionnement et une fréquence de commutation, une première fréquence de commutation correspondant au premier point de fonctionnement du moteur en fonctionnement ; et

régler (S304) une fréquence de commutation de courant de l'onduleur à la première fréquence de commutation ;

**caractérisé en ce que** :

lorsque la vitesse de rotation du moteur est supérieure à une première valeur de vitesse de rotation, la première fréquence de commutation est supérieure à la fréquence de commutation du courant, et lorsque le couple du moteur est supérieur à une première valeur de couple, la première fréquence de commutation est inférieure à la fréquence de commutation du courant ;

et **en ce que** :

la première valeur de vitesse de rotation est une vitesse de rotation maximale à laquelle le moteur est autorisé à fonctionner, et la première valeur de couple est un couple maximal supporté par le moteur.

2. Procédé selon la revendication 1, dans lequel la correspondance entre un point de fonctionnement et une fréquence de commutation est une correspondance entre un type de fonctionnement et une fréquence de commutation, et une pluralité de points de fonctionnement qui appartiennent à un même type de fonctionnement correspondent à une même fréquence de commutation ; et la détermination, sur la base d'une correspondance déterminée entre un point de fonctionnement et une fréquence de commutation, d'une première fréquence de commutation correspondant au premier point de fonctionnement comprend l'étape suivante :

s'il est déterminé que le premier point de fonctionnement appartient à un premier type de fonctionnement, déterminer une première fréquence de commutation du premier type de fonctionnement sur la base de la correspondance déterminée entre un type de fonctionnement et une fréquence de commutation, où le premier type de fonctionnement est l'un d'une pluralité de types de fonctionnement déterminés sur la base du couple ou de la vitesse de rotation du moteur.

3. Procédé selon l'une quelconque des revendications 1 et 2, dans lequel le procédé comprend en outre les étapes suivantes :

obtenir la température du moteur et la température de l'onduleur ; et

lorsque la température du moteur est inférieure à un premier seuil spécifié et que la température de l'onduleur est supérieure à un deuxième seuil spécifié, diminuer la première fréquence de commutation ; ou

lorsque la température du moteur est supérieure au premier seuil spécifié et que la température de l'onduleur est inférieure au deuxième seuil spécifié, augmenter la première fréquence de commutation.

4. Procédé selon l'une quelconque des revendications 1 et 2, dans lequel le procédé comprend en outre les étapes suivantes :

obtenir une première valeur d'efficacité correspondant au premier point de fonctionnement, où la première valeur d'efficacité est une valeur d'efficacité lorsque l'efficacité du moteur atteint une valeur d'efficacité maximale, que l'efficacité de l'onduleur atteint une valeur d'efficacité maximale et que l'efficacité du réducteur de vitesse atteint une valeur d'efficacité maximale ; ou est une valeur d'efficacité lorsque l'efficacité du moteur atteint une valeur d'efficacité maximale et que l'efficacité de l'onduleur et l'efficacité du réducteur de vitesse sont supérieures à un seuil spécifique ; ou est une valeur d'efficacité lorsque l'efficacité du moteur, l'efficacité de l'onduleur et l'efficacité du réducteur de vitesse sont toutes supérieures à un seuil spécifique ;
déterminer une deuxième fréquence de commutation lorsque l'onduleur atteint la première valeur d'efficacité ; et
régler la fréquence de commutation de l'onduleur sur la base de la première fréquence de commutation et de la deuxième fréquence de commutation.

5. Procédé selon la revendication 4, dans lequel l'obtention d'une première valeur d'efficacité correspondant au premier point de fonctionnement comprend l'étape suivante :
déterminer, sur la base d'une carte d'efficacité prédéterminée du moteur, d'une carte d'efficacité prédéterminée de l'onduleur et d'une carte d'efficacité prédéterminée du réducteur de vitesse, la première valeur d'efficacité correspondant au premier point de fonctionnement, où la carte d'efficacité du moteur est utilisée pour représenter les valeurs d'efficacité du moteur à différentes fréquences de commutation de l'onduleur, la carte d'efficacité de l'onduleur est utilisée pour représenter les valeurs d'efficacité de l'onduleur à différentes fréquences de commutation de l'onduleur, et la carte d'efficacité du réducteur de vitesse est utilisée pour représenter les valeurs d'efficacité du réducteur de vitesse à différentes fréquences de commutation de l'onduleur.

6. Procédé selon la revendication 4, dans lequel le réglage de la fréquence de commutation de l'onduleur sur la base de la première fréquence de commutation et de la deuxième fréquence de commutation comprend les étapes suivantes :

lorsqu'il est déterminé qu'une différence entre la première fréquence de commutation et la deuxième fréquence de commutation est supérieure à un troisième seuil, régler la première fréquence de commutation de l'onduleur à la deuxième fréquence de commutation ; ou
lorsqu'il est déterminé que la différence entre la première fréquence de commutation et la deuxième fréquence de commutation est inférieure ou égale au troisième seuil, maintenir la fréquence de commutation de l'onduleur à la première fréquence de commutation.

7. Système d'ensemble d'alimentation, dans lequel le système d'ensemble d'alimentation comprend un moteur, un onduleur et un contrôleur, un courant délivré par l'onduleur est utilisé pour entraîner la rotation du moteur, et le contrôleur est configuré pour exécuter le procédé selon l'une quelconque des revendications 1 à 6.

8. Support de stockage lisible par ordinateur, dans lequel le support de stockage lisible par ordinateur stocke un programme informatique, le programme informatique comprenant des instructions de programme et, lorsque les instructions de programme sont exécutées par le contrôleur du système d'ensemble d'alimentation selon la revendication 7, le contrôleur est activé pour exécuter le procédé selon l'une quelconque des revendications 1 à 6.

FIG. 1a

FIG. 1b

FIG. 2

Obtain a first operating point of a motor in operation — S300

Determine, based on a determined correspondence between an operating point and a switching frequency, a first switching frequency corresponding to the first operating point — S302

Adjust a current switching frequency of an inverter to the first switching frequency — S304

FIG. 3a

FIG. 3b

FIG. 3c

FIG. 3d

```
┌────────────────────────────────────────────────────────┐  S300
│        Obtain a first operating point of a motor in operation        │ ╱
└────────────────────────────────────────────────────────┘
                              │
                              ▼
┌────────────────────────────────────────────────────────┐  S302
│     Determine, based on a determined correspondence between an      │ ╱
│    operating point and a switching frequency, a first switching frequency │
│          corresponding to the first operating point                 │
└────────────────────────────────────────────────────────┘
                              │
                              ▼
┌────────────────────────────────────────────────────────┐  S304
│   Adjust a current switching frequency of an inverter to the first switching │ ╱
│                            frequency                                │
└────────────────────────────────────────────────────────┘
                              │
                              ▼
┌────────────────────────────────────────────────────────┐  S306
│      Obtain temperature of the motor and temperature of the inverter │ ╱
└────────────────────────────────────────────────────────┘
                              │
                              ▼
┌────────────────────────────────────────────────────────┐  S308
│   Adjust the first switching frequency based on the temperature of the │ ╱
│         motor and/or the temperature of the inverter                │
└────────────────────────────────────────────────────────┘
```

FIG. 4

Obtain a first operating point of a motor in operation

S300

Determine, based on a determined correspondence between an operating point and a switching frequency, a first switching frequency corresponding to the first operating point

S302

Adjust a current switching frequency of an inverter to the first switching frequency

S304

Obtain a first efficiency value corresponding to the first operating point

S3010

Determine a second switching frequency when the inverter meets the first efficiency value

S3012

Adjust the switching frequency of the inverter based on the first switching frequency and the second switching frequency

S3014

FIG. 5

Obtain temperature of a motor and temperature of an inverter | S600

Adjust a switching frequency of the inverter based on the temperature of the motor and/or the temperature of the inverter | S602

FIG. 6

Obtain a first operating point of a motor in operation, and determine a first efficiency value corresponding to the first operating point | S700

Determine a second switching frequency when an inverter meets the first efficiency value | S702

Adjust a current switching frequency of the inverter to the second switching frequency | S704

FIG. 7

Obtain a first operating point of a motor in operation, and determine a first efficiency value corresponding to the first operating point

S700

Determine a second switching frequency when an inverter meets the first efficiency value

S702

Adjust a current switching frequency of the inverter to the second switching frequency

S704

Obtain temperature of the motor and temperature of the inverter

S706

Adjust the second switching frequency based on the temperature of the motor and/or the temperature of the inverter

S708

FIG. 8a

FIG. 8b

FIG. 9

100

1000 1002

Obtaining unit

Adjustment unit

Apparatus for adjusting a
switching frequency

FIG. 10

110

1100  1102  1104

First obtaining unit

Determining unit

First adjustment unit

Apparatus for adjusting a switching frequency

FIG. 11

120

Power assembly system

1201

Processor

1202

Memory

Application program code

1203

Communication interface

FIG. 12

**EP 4 156 492 B1**

**Patent documents cited in the description**

- JP 6080996 B
- JP 2009190442 A
- US 9318991 B2